(19) Europäisches Patentamt
European Patent Office
Office européen des brevets

(11) **EP 4 700 884 A2**

(12) **EUROPEAN PATENT APPLICATION**


(43) Date of publication:
**25.02.2026 Bulletin 2026/09**

(21) Application number: **25197287.3**

(22) Date of filing: **21.08.2025**

(51) International Patent Classification (IPC):
***H01M 10/0525*** *(2010.01)* ***H01M 10/056*** *(2010.01)*
***H01M 10/0565*** *(2010.01)*

(52) Cooperative Patent Classification (CPC):
**H01M 10/0525; H01M 10/056; H01M 10/0565;**
H01M 2300/0082; H01M 2300/0091

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **21.08.2024 KR 20240112222**
**20.08.2025 KR 20250115565**



(71) Applicants:
- **SK On Co., Ltd.**
  **Seoul 03161 (KR)**
- **SK innovation Co., Ltd.**
  **Seoul 03188 (KR)**

(72) Inventors:
- **LEE, Han Sol**
  **34124 Daejeon (KR)**
- **GO, Hyeon Jin**
  **34124 Daejeon (KR)**
- **PARK, Myung Soo**
  **34124 Daejeon (KR)**
- **RYU, Hye Min**
  **34124 Daejeon (KR)**
- **BAN, Hee Jung**
  **34124 Daejeon (KR)**
- **KIM, Myoung Lae**
  **34124 Daejeon (KR)**
- **LEE, Hong Won**
  **34124 Daejeon (KR)**

(74) Representative: **Stolmár & Partner Patentanwälte PartG mbB**
**Blumenstraße 17**
**80331 München (DE)**


(54) **MONOMER FOR ELECTROLYTE, ELECTROLYTE FOR SECONDARY BATTERY INCLUDING THE SAME, METHOD OF PREPARING THE SAME AND LITHIUM SECONDARY BATTERY INCLUDING THE SAME**


(57) A monomer for an electrolyte according to the embodiments of the present disclosure may include a compound represented by Formula 1. The lithium secondary battery according to the embodiments of the present disclosure includes a cathode, an anode, and an electrolyte layer, and the electrolyte layer may include a polymer formed by polymerizing the compound represented by Formula 1.


[FIG. 1]

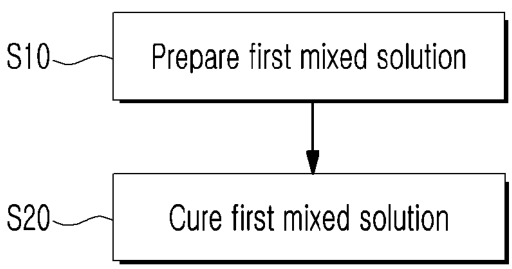


EP 4 700 884 A2

## Description

### BACKGROUND

#### 1. Technical Field

The present disclosure relates to an electrolyte monomer, an electrolyte for a secondary battery comprising the monomer, a method of preparing the electrolyte, and a lithium secondary battery comprising the electrolyte.

#### 2. Technical Considerations

Secondary batteries are batteries that can be repeatedly charged and discharged. With the development of the information, communication and display industries, secondary batteries have been widely applied as power sources for portable electronic communication devices, such as camcorders, mobile phones, and laptop PCs. In addition, battery packs including the secondary batteries have recently been developed and applied as power sources for eco-friendly vehicles, such as hybrid cars.

Examples of the secondary battery may include a lithium secondary battery, a nickelcadmium battery, a nickel-hydrogen battery and the like. Among them, the lithium secondary battery has a high operating voltage and a high energy density per unit weight, making it advantageous in terms of charging speed and weight reduction, such that development thereof is progressing in this regard.

Since commercially available lithium secondary batteries mainly use liquid electrolytes until now, there are safety problems such as leakage, ignition, and explosion due to sudden environmental changes, including temperature fluctuations, external impacts and the like. To address these problems, attempts are being made to solidify the electrolyte, thereby enhancing stability and increasing energy density.

All-solid-state batteries may include solid-state electrolytes such as gel polymers, oxides, sulfides, or composite polymers as the electrolyte. Accordingly, stability against ignition and explosion caused by external impacts or external environmental fluctuations may be enhanced.

However, among solid batteries, a battery that includes a portion of a liquid electrolyte may have a greater risk of ignition than the all-solid-state battery. Therefore, research on flame retardant additives that may be included in the electrolyte has been actively conducted to improve the stability against ignition of gel polymer electrolytes or composite polymer electrolytes.

### SUMMARY

An object of the present disclosure is to provide an electrolyte monomer with improved flame retardancy.

Another object of the present disclosure is to provide an electrolyte for a secondary battery with improved flame retardancy and/or ionic conductivity.

Still another object of the present disclosure is to provide a method of preparing an electrolyte for a secondary battery with improved flame retardancy and/or ionic conductivity.

Yet another object of the present disclosure is to provide a lithium secondary battery with improved stability and/or electrochemical characteristics.

A monomer for an electrolyte according to some non-limiting embodiments of the present disclosure may comprise a compound represented by Formula 1 below:

[Formula 1]

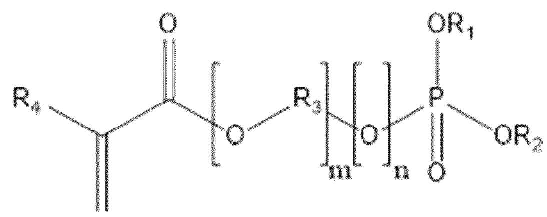

In Formula 1, $R_1$ and $R_2$ may each independently be a substituted or unsubstituted C1 to C12 alkyl group, or a substituted or unsubstituted C6 to C12 aromatic hydrocarbon group, and $R_1$ and $R_2$ may be linked to each other to form a ring.

In Formula 1, $R_3$ may be a substituted or unsubstituted C1 to C5 alkylene group.

In Formula 1, $R_4$ may be hydrogen or a C1 to C5 alkyl group.

In Formula 1, m may be 1 to 5, and n may be 0 or 1.

In some non-limiting embodiments, $R_1$ and $R_2$ may each independently be a substituted or unsubstituted C1 to C10 alkyl group, or a substituted or unsubstituted C6 to C10 aromatic hydrocarbon group, $R_1$ and $R_2$ may be linked to each other to form a ring, $R_3$ may be a C2 alkylene group, $R_4$ may be hydrogen or a C1 to C3 alkyl group, and m may be 1 to 3.

In some non-limiting embodiments, m may be 1.

In some non-limiting embodiments, in Formula 1, n may be 1, $R_1$ and $R_2$ may each independently be a substituted or unsubstituted C6 to C10 aryl group, or a substituted or unsubstituted C1 to C7 alkyl group, and $R_3$ may be a substituted or unsubstituted C1 to C3 alkylene group.

In some non-limiting embodiments, in Formula 1, n may be 0, $R_1$ and $R_2$ may each independently be a substituted or unsubstituted C1 to C7 alkyl group, and $R_3$ may be a substituted or unsubstituted C1 to C3 alkylene group.

In some non-limiting embodiments, in Formula 1, n may be 1, $R_1$ and $R_2$ may each independently be an unsubstituted C6 to C10 aryl group, or an unsubstituted C1 to C5 alkyl group, and $R_3$ may be an unsubstituted C2 alkylene group.

In some non-limiting embodiments, in Formula 1, n may be 0, $R_1$ and $R_2$ may each independently be an unsubstituted C1 to C5 alkyl group, and $R_3$ may be an unsubstituted C2 alkylene group.

In some non-limiting embodiments, the monomer for an electrolyte may comprise at least one selected from the group consisting of compounds represented by Formulas 2 to 4 below.

[Formula 2]

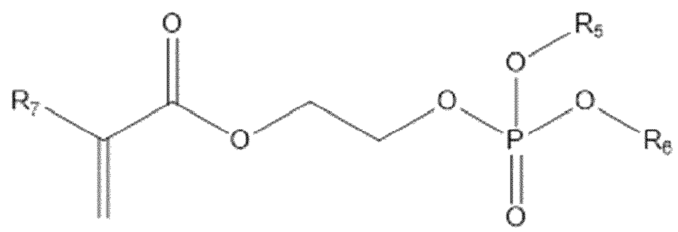

In Formula 2, $R_5$ and $R_6$ may each independently be hydrogen, a substituted or unsubstituted C1 to C5 alkyl group, or a substituted or unsubstituted C6 to C10 aryl group, and $R_7$ may be hydrogen or a C1 to C3 alkyl group.

[Formula 3]

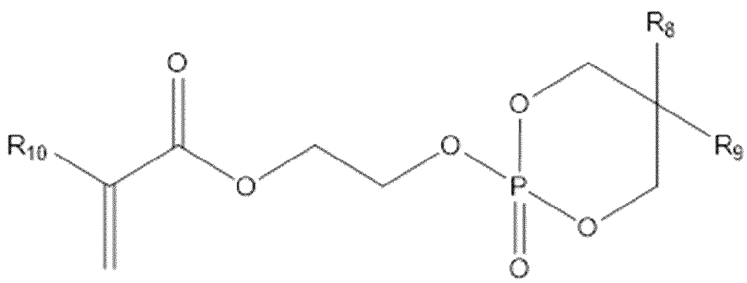

In Formula 3, $R_8$ and $R_9$ may each independently be hydrogen, or a substituted or unsubstituted C1 to C3 alkyl group, and $R_{10}$ may be hydrogen or a C1 to C3 alkyl group.

[Formula 4]

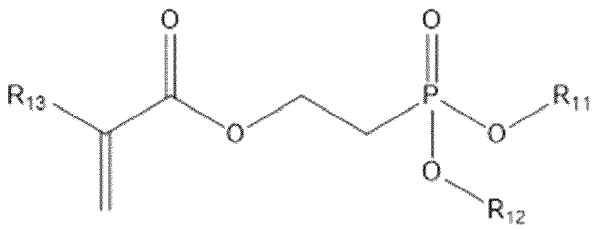

In Formula 4, $R_{11}$ and $R_{12}$ may each independently be hydrogen, or a substituted or unsubstituted C1 to C5 alkyl group, and $R_{13}$ may be hydrogen or a C1 to C3 alkyl group.

In some non-limiting embodiments, the monomer for an electrolyte may comprise at least one selected from the group consisting of compounds represented by Formulas 2-1, 2-2, 3-1 and 4-1 below.

[Formula 2-1]

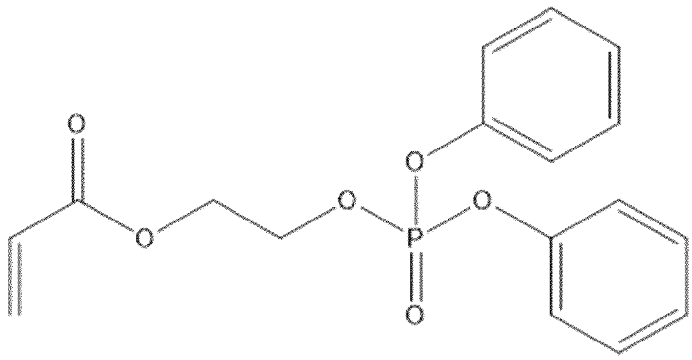

[Formula 2-2]

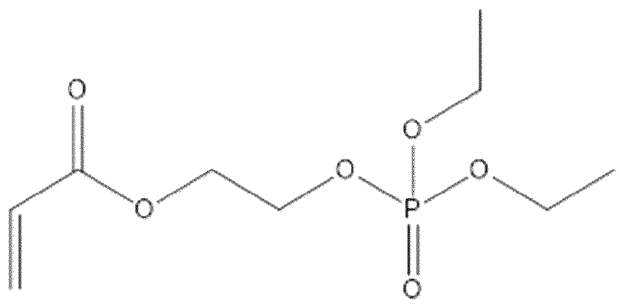

[Formula 3-1]

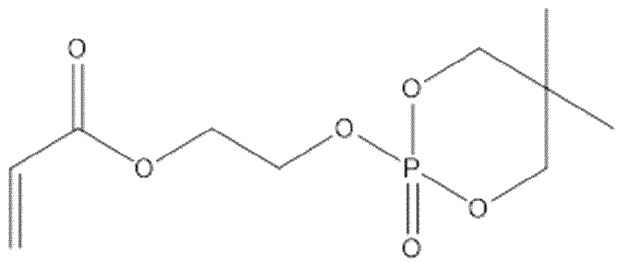

[Formula 4-1]

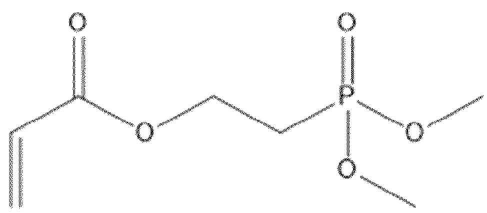

and

In some non-limiting embodiments, the monomer for an electrolyte may comprise at least one of the compound represented by Formula 3 above and the compound represented by Formula 4 above; and the compound represented by

Formula 2 above.

In some non-limiting embodiments, the monomer for an electrolyte may comprise the compound represented by Formula 2 above and the compound represented by Formula 4 above.

An electrolyte for a secondary battery according to some non-limiting embodiments of the present disclosure may comprise: a flame retardant compound comprising a polymer formed by polymerizing the above-described monomer for an electrolyte; and a lithium salt.

In some non-limiting embodiments, the content of the flame retardant compound may be 3% by weight to 60% by weight based on the total weight of the electrolyte for the secondary battery.

A lithium secondary battery according to some non-limiting embodiments of the present disclosure may comprise: a cathode; an anode disposed to face the cathode; and an electrolyte layer disposed between the cathode and the anode, and comprising the above-described electrolyte for a secondary battery.

A method of preparing an electrolyte for a secondary battery according to some non-limiting embodiments of the present disclosure may comprise: preparing a first mixed solution comprising the above-described monomer for an electrolyte and an electrolyte solution; and curing the first mixed solution.

In some non-limiting embodiments, the first mixed solution may further comprise an organic polymer and an inorganic electrolyte.

In some non-limiting embodiments, the content of the monomer for an electrolyte may be 3% by weight to 60% by weight based on the total weight of the first mixed solution.

In some non-limiting embodiments, the first mixed solution may further comprise a thermal initiator, and the step of curing the first mixed solution may comprise heat-treating the first mixed solution.

In some non-limiting embodiments, the first mixed solution may further comprise a photo-initiator, and the step of curing the first mixed solution may comprise irradiating the first mixed solution with light.

The monomer for an electrolyte ("electrolyte monomer") according to some non-limiting embodiments of the present disclosure may have self-extinguishing properties. The ignition stability of an electrolyte comprising the electrolyte monomer may be improved.

The electrolyte monomer according to some non-limiting embodiments of the present disclosure may be comprised in an electrolyte for a secondary battery within a predetermined content range. The stability and electrical characteristics of the electrolyte may be improved simultaneously.

The lithium secondary battery according to some non-limiting embodiments of the present disclosure may comprise the electrolyte for a secondary battery. The room-temperature and high-temperature safety and ionic conductivity may be improved, thereby enhancing the cycle life characteristics and electrical characteristics.

These and other features and characteristics of the present disclosure, as well as the methods of operation and functions of the related elements of structures and the combination of parts and economies of manufacture, will become more apparent upon consideration of the description herein and the appended claims with reference to the accompanying drawings, all of which form a part of this specification, wherein like reference numerals designate corresponding parts in the various figures. It is to be expressly understood, however, that the drawings are for the purpose of illustration and description only and are not intended as a definition of the limits of the disclosed subject matter.

## BRIEF DESCRIPTION OF THE DRAWINGS

The above and other objects, features and other advantages of the present disclosure will be more clearly understood from the following detailed description taken in conjunction with the accompanying drawings, in which:

FIG. 1 is a schematic flowchart for describing processes of a method of preparing an electrolyte for a secondary battery according to exemplary embodiments;
FIG. 2 is a schematic cross-sectional view illustrating an electrode cell according to exemplary embodiments; and
FIG. 3 is a schematic view illustrating the structure of an electrolyte layer for a secondary battery according to exemplary embodiments.

## DETAILED DESCRIPTION

It is to be understood that the present disclosure may assume various alternative variations and step sequences, except where expressly specified to the contrary. It is also to be understood that the specific devices and processes illustrated in the attached drawings, and described in the following specification, are simply exemplary and non-limiting embodiments or aspects of the disclosed subject matter. Hence, specific dimensions and other physical characteristics related to the embodiments or aspects disclosed herein are not to be considered as limiting.

No aspect, component, element, structure, act, step, function, instruction, and/or the like used herein should be construed as critical or essential unless explicitly described as such. The singular form of the term used herein may be

intended to also include a plural form, unless otherwise indicated. As used herein, the singular form of "a", "an", and "the" include plural referents unless the context clearly states otherwise.

For the purposes of this disclosure, unless otherwise indicated, all numbers expressing quantities of ingredients, reaction conditions, dimensions, physical characteristics, and so forth used in the disclosure are to be understood as being modified in all instances by the term "about." Unless indicated to the contrary, the numerical parameters set forth in the present disclosure are approximations that can vary depending upon the desired properties sought to be obtained by the present disclosure.

The numerical ranges used in the present specification includes all values within the ranges including the lower limit and the upper limit, increments logically derived from the form and spanning of a defined range, all double limited values, and all possible combinations of the upper limit and the lower limit of the numerical range defined in different forms. Unless otherwise defined in the present disclosure, values which may be outside of a numerical range due to experimental error or rounding off of a value are also included in the defined numerical range.

Notwithstanding that the numerical ranges and parameters setting forth the broad scope of the disclosure are approximations, the numerical values set forth in the specific examples are reported as precisely as possible. Any numerical value, however, inherently contains certain errors necessarily resulting from the standard deviation found in their respective testing measurements.

Also, it should be understood that any numerical range recited herein is intended to include all sub-ranges subsumed therein. For example, a range of "1 to 10" is intended to include any and all sub-ranges between and including the recited minimum value of 1 and the recited maximum value of 10, that is, all subranges beginning with a minimum value equal to or greater than 1 and ending with a maximum value equal to or less than 10, and all subranges in between, e.g., 1 to 6.3, or 5.5 to 10, or 2.7 to 6.1.

The term "comprise" mentioned in the present disclosure is an open-ended description having a meaning equivalent to the term such as "include", "is/are provided", "contain", or "have", and does not exclude elements, materials, or processes which are not further listed.

According to some non-limiting embodiments, an electrolyte monomer, a method of preparing an electrolyte for a secondary battery comprising the same, and an electrolyte for a secondary battery prepared using the method are provided. In addition, a lithium secondary battery comprising an electrolyte layer comprising the electrolyte for a secondary battery is also provided.

Hereinafter, non-limiting embodiments of the present disclosure will be described in detail. However, these are merely illustrative and the present disclosure is not limited to the specific embodiments described by way of example.

Unless otherwise defined herein, when a portion such as a layer, film, thin-film, region, or plate, etc., is present "on" or "above" another portion, it may comprise not only the case where the portion is present "directly on" the other portion, but also the case where another portion is present between them.

If there is an isomer of a compound represented by a formula used herein, the compound represented by the corresponding formula refers to the representative formula comprising the isomer.

The term "substituted or unsubstituted Ca to Cb Y group" as used herein means that the Y group in an unsubstituted state has a to b carbon atoms, and does not comprise the carbon number of a substituent substituted on the Y group.

The term "aromatic hydrocarbon group" as used herein refers to a group that exhibits overall aromaticity or comprises an aromatic ring such as for example a benzene ring within its molecular structure. For example, the aromatic hydrocarbon group may comprise a substituted or unsubstituted aryl group, a substituted or unsubstituted arylalkyl group, or a substituted or unsubstituted alkylaryl group.

The term "substituted" as used herein may mean that at least one of the hydrogen atoms of a compound is substituted with a substituent such as a halogen group, a hydroxyl group, a heteroalkyl group (C1-C5), a heterocycloalkyl group (C1-C5), a heteroaryl group (C6-C12), an amine group, a nitrile group, a nitro group, a silyl group, or the like.

The terms "heteroalkyl group," "heterocycloalkyl group," and "heteroaryl group" as used herein may mean that at least one of the carbon atoms of an alkyl group, a cycloalkyl group, and an aryl group is substituted with at least one selected from the group consisting of nitrogen, oxygen, and sulfur, respectively.

The term "unsubstituted" as used herein may mean that none of the hydrogen atoms of the compound are substituted.

The term "unsubstituted alkylene group" as used herein may refer to a saturated hydrocarbon group in which none of the hydrogen atoms comprised in the alkylene group are substituted with other atoms or molecules.

The term "fluorine-substituted" as used herein may mean that at least one of the hydrogen atoms of a compound is substituted with fluorine (F).

The term "flame retardancy" as used herein refers to the performance of preventing or suppressing combustion whereby a sample burns while in contact with a flame (ignition source) but self-extinguishes once the flame is removed. The flame retardancy may be evaluated based on the time it takes for the flame to be extinguished after removing the torch used to supply a flame with a certain heat amount to the sample for 1 second or more. The shorter the time it takes for the

flame to be extinguished, the better the flame retardancy is evaluated to be.

Specifically, the term "flame retardant compound" as used herein may be a compound which, when glass fiber cut to a diameter of 16 pi is impregnated with the flame retardant compound and cured as needed, and then ignited by supplying a flame of a constant heat amount for 1 second or more using a torch and the torch is removed, exhibits an extinguishing time (s/g) relative to the mass of the sample of 72 s/g or less, for example 68 s/g or less.

The term "solubility" as used in the present disclosure refers to the mass (g) of an organic polymer that can be dissolved in 100 g of a first solvent or a second solvent. For example, a solubility of 1 g/100 g indicates that 1 g of the organic polymer is dissolved in 100 g of the first solvent or the second solvent.

The electrolyte monomer according to some non-limiting embodiments may comprise a compound represented by Formula 1 below.

[Formula 1]

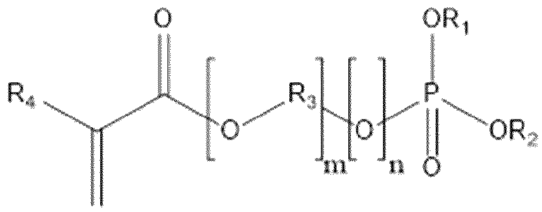

The compound represented by Formula 1 above is a phosphorus compound comprising a phosphate group or a phosphonate group. Accordingly, without being bound by any particular theory, when ignited, the compound represented by Formula 1 above may be thermally decomposed upon combustion to generate polymetaphosphate. In addition, as the polymetaphosphate is generated, a carbon compound (e.g., charcoal) may be generated by dehydration, esterification and dehydrogenation reactions of the polymetaphosphate. The polymetaphosphate may form a protective layer and the carbon compound may form a carbon film, thus the compound represented by Formula 1 above may block oxygen and heat under high-temperature conditions such as ignition and combustion. Accordingly, the self-extinguishing properties of an electrolyte described below comprising a polymer or copolymer of the compound represented by Formula 1 above may be high.

In addition, chain ignition of the electrolyte may be promoted by free radicals (e.g., hydrogen radicals) generated by the ignition of an organic solvent, etc. However, without being bound by any particular theory, the phosphorus atom comprised in the compound represented by Formula 1 above may suppress the chain ignition by removing the free radicals (e.g., hydrogen free radicals). Accordingly, the electrolyte comprising the compound represented by Formula 1 above and a polymer or copolymer thereof may have high self-extinguishing properties and improved flame retardancy.

In some non-limiting embodiments, $R_1$ and $R_2$ may each independently be a substituted or unsubstituted C1 to C12 alkyl group, or a substituted or unsubstituted C6 to C12 aromatic hydrocarbon group.

In some non-limiting embodiments, $R_1$ and $R_2$ may each independently be a substituted or unsubstituted C1 to C10, C1 to C8, C1 to C7, C1 to C5, C1 to C4, C1 to C3, or C1 to C2 alkyl group.

In some non-limiting embodiments, $R_1$ and $R_2$ may be linked to each other to form a ring. For example, at least one of the carbon atoms of $R_1$ and at least one of the carbon atoms of $R_2$ may be linked to each other to form a ring.

In some non-limiting embodiments, $R_1$ and $R_2$ may each independently be a substituted or unsubstituted C6 to C10, C6 to C9, or C6 to C8 aryl group. For example, the aryl group may be a phenyl group, a tolyl group, a xylyl group, a naphthyl group, or the like. Accordingly, the heat resistance and structural stability of the polymer or copolymer of the compound represented by Formula 1 above may be further improved.

In some non-limiting embodiments, $R_3$ may be a substituted or unsubstituted C1 to C5 alkylene group. For example, $R_3$ may be a C2 alkylene group (ethylene group).

In some non-limiting embodiments, $R_4$ may be hydrogen, or a substituted or unsubstituted C1 to C5, or C1 to C3 alkyl group.

In some non-limiting embodiments, m may be 1 to 5, or 1 to 3. For example, m may be 2 or 1. As m decreases, the phosphorus content per unit mass of the electrolyte comprising a polymer or copolymer of the compound represented by Formula 1 may further increase. Accordingly, the self-extinguishing property of the electrolyte may further be improved.

In some non-limiting embodiments, n may be 0 or 1.

In some non-limiting embodiments, in the electrolyte monomer, $R_1$ and $R_2$ may each independently be a substituted or unsubstituted C1 to C10 alkyl group, or a substituted or unsubstituted C6 to C10 aromatic hydrocarbon group; $R_1$ and $R_2$ may be linked to each other to form a ring; $R_3$ may be a C2 alkylene group; $R_4$ may be hydrogen or a C1 to C3 alkyl group; and m may be 1 to 3. Accordingly, the phosphorus content relative to carbon increases, thereby further suppressing chain ignition of an electrolyte comprising a polymer or copolymer of the electrolyte monomer, and further

improving flame retardancy.

In some non-limiting embodiments, m may be 1. In this case, since the phosphorus content of the electrolyte monomer is further increased, the chain ignition of the electrolyte comprising a polymer or copolymer of the electrolyte monomer may be further suppressed, and the flame retardancy may be further improved.

In some non-limiting embodiments, when n is 1 in Formula 1 above, $R_1$ and $R_2$ may each independently be a substituted or unsubstituted C6 to C10 aryl group, or a substituted or unsubstituted C1 to C7 alkyl group; and $R_3$ may be a substituted or unsubstituted C1 to C3 alkylene group.

In some non-limiting embodiments, when n is 0 in Formula 1, $R_1$ and $R_2$ may each independently be a substituted or unsubstituted C1 to C7 alkyl group; and $R_3$ may be a substituted or unsubstituted C1 to C3 alkylene group. Accordingly, the phosphorus content by weight of the monomer represented by Formula 1 above may further increase. As a result, the self-extinguishing property of an electrolyte comprising a polymer or copolymer of the monomer may be further improved.

In some non-limiting embodiments, when n is 1 in Formula 1 above, $R_1$ and $R_2$ may each independently be an unsubstituted C6 to C10 aryl group, or an unsubstituted C1 to C5 alkyl group; and $R_3$ may be an unsubstituted C2 alkylene group.

In some non-limiting embodiments, when n is 0 in Formula 1, $R_1$ and $R_2$ may each independently be an unsubstituted C1 to C5 alkyl group; and $R_3$ may be an unsubstituted C2 alkylene group. Accordingly, the phosphorus content by weight of the monomer represented by Formula 1 above may further increase. Accordingly, the self-extinguishing property of the electrolyte comprising a polymer or copolymer of the monomer may be further improved.

In some non-limiting embodiments, the electrolyte monomer may comprise at least one selected from the group consisting of compounds represented by Formulas 2 to 4 below. For example, the compound represented by Formula 1 above may comprise at least one selected from the group consisting of compounds represented by Formulas 2 to 4 below.

[Formula 2]

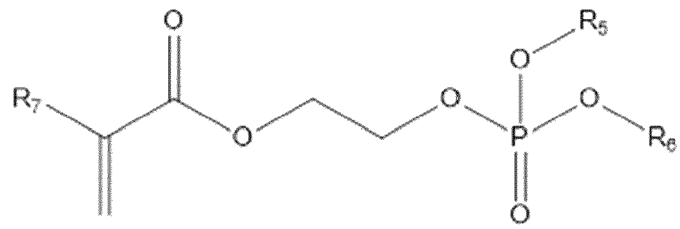

**In** Formula 2, $R_5$ and $R_6$ may each independently be hydrogen, a substituted or unsubstituted C1 to C5 alkyl group, or a substituted or unsubstituted C6 to C10 aryl group, and $R_7$ may be hydrogen or a C1 to C3 alkyl group.

In some non-limiting embodiments, the compound represented by Formula 2 may comprise equivalents thereof. For example, at least one hydrogen atom bonded to a carbon atom in Formula 2 may be further substituted with substituents within an equivalent range. For instance, at least one hydrogen atom bonded to a carbon atom in Formula 2 may be further substituted with deuterium or an alkyl group having 1 to 5 carbon atoms.

[Formula 3]

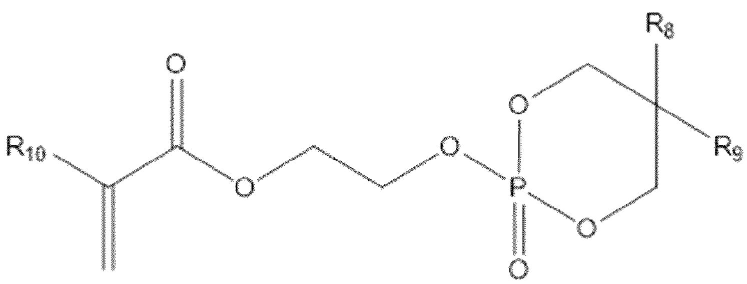

In Formula 3, $R_8$ and $R_9$ may each independently be hydrogen, or a substituted or unsubstituted C1 to C3 alkyl group, and $R_{10}$ may be hydrogen or a C1 to C3 alkyl group.

In some non-limiting embodiments, the compound represented by Formula 3 may comprise equivalents thereof. For example, at least one hydrogen atom bonded to a carbon atom in Formula 3 may be further substituted with substituents within an equivalent range. For instance, at least one hydrogen atom bonded to a carbon atom in Formula 3 may be further substituted with deuterium or an alkyl group having 1 to 5 carbon atoms.

[Formula 4]

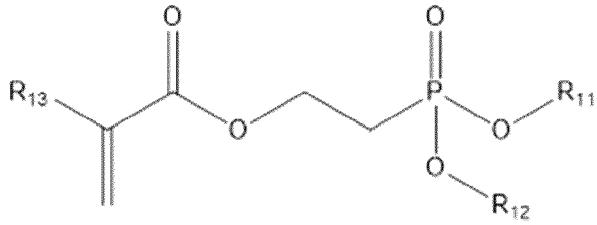

In Formula 4, $R_{11}$ and $R_{12}$ may each independently be hydrogen, or a substituted or unsubstituted C1 to C5 alkyl group, and $R_{13}$ may be hydrogen or a C1 to C3 alkyl group.

In some non-limiting embodiments, the compound represented by Formula 4 may comprise equivalents thereof. For example, at least one hydrogen atom bonded to a carbon atom in Formula 4 may be further substituted with substituents within an equivalent range. For instance, at least one hydrogen atom bonded to a carbon atom in Formula 4 may be further substituted with deuterium or an alkyl group having 1 to 5 carbon atoms.

The compounds represented by Formulas 2 to 4 have either a phosphate group or a phosphonate group and exhibit a high content of unshared electron pairs. In addition, the phosphorus-to-carbon ratio is high. Accordingly, an electrolyte comprising a polymer or copolymer of the compound may suppress chain ignition in the event of combustion.

In some non-limiting embodiments, the compound represented by Formula 2 may comprise at least one of Formulas 2-1 and 2-2 below.

[Formula 2-1]

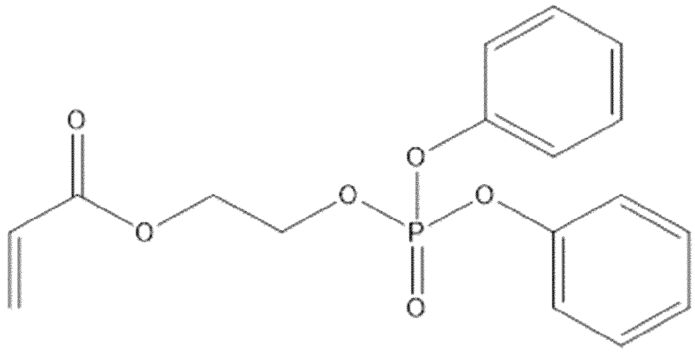

The compound represented by Formula 2-1 comprises a phosphate group and a phenyl group. Accordingly, the ignition onset temperature of the compound represented by Formula 2-1 may be increased. In addition, the compound represented by Formula 2-1 exhibits a high phosphorus content by weight per unit molecule. Accordingly, the chain ignition reaction of the electrolyte comprising a polymer or copolymer of the electrolyte monomer may be further suppressed, and the self-extinguishing property may be further improved.

In some non-limiting embodiments, the compound represented by Formula 2-1 may comprise equivalents thereof. For example, at least one hydrogen atom bonded to a carbon atom in Formula 2-1 may be further substituted with substituents within an equivalent range. For instance, at least one hydrogen atom bonded to a carbon atom in Formula 2-1 may be further substituted with deuterium or an alkyl group having 1 to 5 carbon atoms.

[Formula 2-2]

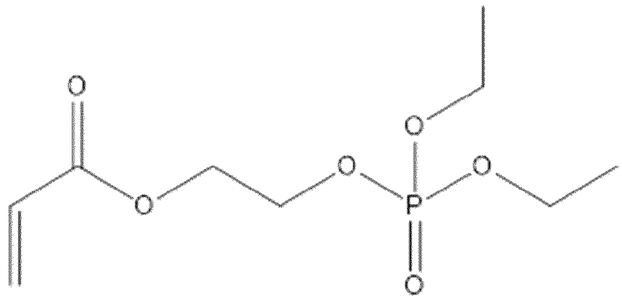

The compound represented by Formula 2-2 comprises a phosphate group and has a small number of carbon atoms bonded to the phosphate group. Accordingly, the relative phosphorus content by weight in the electrolyte monomer may be increased. As a result, the chain ignition reaction of the electrolyte comprising a polymer or copolymer of the electrolyte monomer may be further suppressed, and the self-extinguishing property may be further improved.

In some non-limiting embodiments, the compound represented by Formula 2-2 may comprise equivalents thereof. For example, at least one hydrogen atom bonded to a carbon atom in Formula 2-2 may be further substituted with substituents within an equivalent range. For instance, at least one hydrogen atom bonded to a carbon atom in Formula 2-2 may be further substituted with deuterium or an alkyl group having 1 to 5 carbon atoms.

In some non-limiting embodiments, the compound represented by Formula 3 may comprise a compound represented by Formula 3-1 below.

[Formula 3-1]

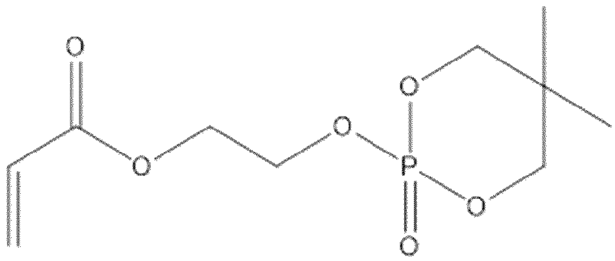

The compound represented by Formula 3-1 comprises a phosphate group and a heterocycloalkyl group. When the compound represented by Formula 3-1 is ignited, the structure of the heterocycloalkyl group may collapse, thereby forming polymetaphosphate and a carbon compound. In addition, the compound represented by Formula 3-1 exhibits a high phosphorus content by weight per unit molecule. Accordingly, the chain ignition reaction of the electrolyte comprising a polymer or copolymer of the above-described electrolyte monomer may be further suppressed, and the self-extinguishing property may be further improved.

In some non-limiting embodiments, the compound represented by Formula 3-1 may comprise equivalents thereof. For example, at least one hydrogen atom bonded to a carbon atom in Formula 3-1 may be further substituted with substituents within an equivalent range. For instance, at least one hydrogen atom bonded to a carbon atom in Formula 3-1 may be further substituted with deuterium or an alkyl group having 1 to 5 carbon atoms.

In some non-limiting embodiments, the compound represented by Formula 4 may comprise a compound represented by Formula 4-1 below.

[Formula 4-1]

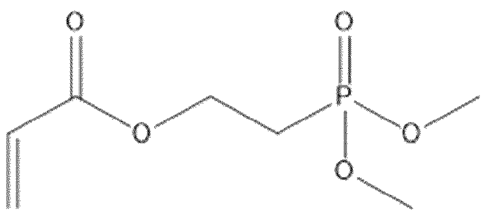

The compound represented by Formula 4-1 comprises a phosphonate group and has a small number of carbon atoms bonded to the phosphonate group. Accordingly, the relative phosphorus content by weight in the electrolyte monomer may be increased. Accordingly, the chain ignition reaction of the electrolyte comprising a polymer or copolymer of the electrolyte monomer may be further suppressed, and the self-extinguishing property may be further improved.

In some non-limiting embodiments, the compound represented by Formula 4-1 may comprise equivalents thereof. For example, at least one hydrogen atom bonded to a carbon atom in Formula 4-1 may be further substituted with substituents within an equivalent range. For instance, at least one hydrogen atom bonded to a carbon atom in Formula 4-1 may be further substituted with deuterium or an alkyl group having 1 to 5 carbon atoms.

In some non-limiting embodiments, the compound represented by Formula 1 above may comprise at least one selected from the group consisting of compounds represented by Formulas 2-1, 2-2, 3-1 and 4-1 above.

For example, the compound represented by Formula 1 above may comprise at least one of a compound represented by Formula 2-1, a compound represented by Formula 2-2, a compound represented by Formula 3-1 and a compound represented by Formula 4-1. For example, the compound represented by Formula 2-1, the compound represented by Formula 2-2, the compound represented by Formula 3-1 and the compound represented by Formula 4-1 may be used as an electrolyte monomer in combination of two or more thereof. The polymer or copolymer of the electrolyte monomer may be a cross-linked polymer or a network polymer, and may have thermosetting properties. Accordingly, the flame retardancy of the electrolyte comprising a polymer or copolymer of the electrolyte monomer may be further improved.

In some non-limiting embodiments, the electrolyte monomer may comprise at least one of a compound represented by Formula 3 and a compound represented by Formula 4; and a compound represented by Formula 2. For example, a combination of a compound represented by Formula 3-1 and a compound represented by Formula 2-1; or a compound represented by Formula 4-1 and a compound represented by Formula 2-2 may be used as the electrolyte monomer. Accordingly, the flame retardancy of the electrolyte comprising a polymer or copolymer of the electrolyte monomer may be further improved.

In some non-limiting embodiments, as the electrolyte monomer, both the compound represented by Formula 2 and the compound represented by Formula 4 may be used. For example, both the compound represented by Formula 2-2 and the compound represented by Formula 4-1 may be used in combination. Accordingly, the flame retardancy of the electrolyte comprising a polymer or copolymer of the electrolyte monomer may be further improved.

According to some non-limiting embodiments, the flame retardant compound may comprise a polymer and/or copolymer of the above-described electrolyte monomer. For example, side reactions between the flame retardant compound and the electrolyte, which will be described below, may be suppressed. In addition, the flame retardant compound may comprise a phosphorus-containing functional group, thereby inhibiting oxygen during combustion and preventing thermal runaway.

In some non-limiting embodiments, the flame retardant compound may be a polymer or copolymer of an electrolyte monomer comprising a thermally reactive functional group and/or a photoreactive functional group. For example, the above-described electrolyte monomer may comprise an acrylate group. Accordingly, the acrylate group in the polymer or copolymer may function as a thermally reactive functional group or a photoreactive functional group.

In some non-limiting embodiments, the flame retardant compound may comprise a polymer formed by polymerizing the above-described compound represented by Formula 1. For example, the flame retardant compound may comprise a polymer or copolymer of the compound represented by Formula 1. For instance, the polymer may be formed by polymerizing the (meth)acrylate group comprised in the above-described compound represented by Formula 1.

In some non-limiting embodiments, the flame retardant compound may comprise a compound represented by Formula 5 below. For example, the flame retardant compound may be a cross-linked polymer or a network polymer connected by using a compound represented by Formula 5 below as a unit structure.

[Formula 5]

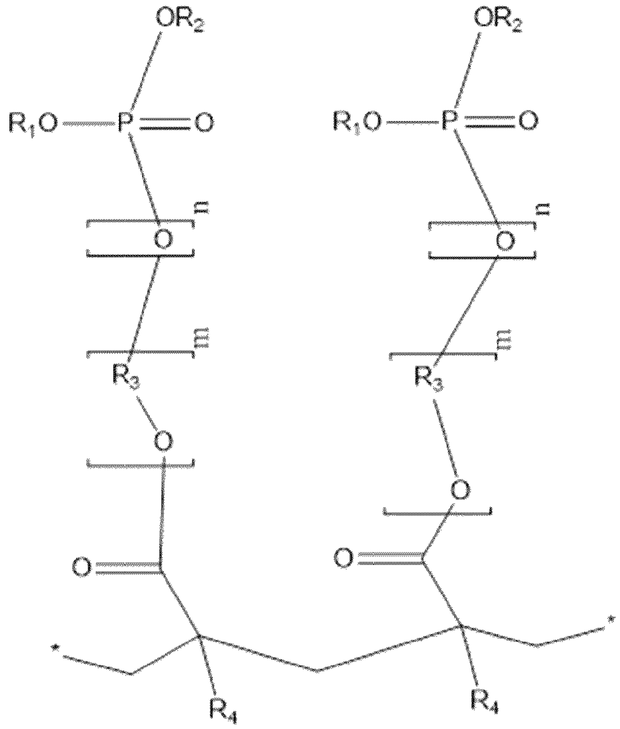

In Formula 5, $R_1$, $R_2$, $R_3$, $R_4$, m, and n may be the same as those described above with reference to Formula 1, and * represents a bonding site.

In some non-limiting embodiments, the compound represented by Formula 5 may comprise equivalents thereof. For example, at least one hydrogen atom bonded to a carbon atom in Formula 5 may be further substituted with substituents within an equivalent range. For instance, at least one hydrogen atom bonded to a carbon atom in Formula 5 may be further substituted with deuterium or an alkyl group having 1 to 5 carbon atoms.

The electrolyte for a secondary battery according to some non-limiting embodiments (hereinafter, also abbreviated as the "electrolyte") may comprise a flame retardant compound and a lithium salt. For example, the flame retardant compound may comprise a polymer of the above-described electrolyte monomer.

In some non-limiting embodiments, the flame retardant compound may comprise a copolymer of the above-described electrolyte monomer and another monomer. The other monomer may comprise an acrylate group, for example, trimethylolpropane tri(meth)acrylate.

The lithium salt may be expressed by $Li^+X^-$, for example. In some non-limiting embodiments, the anion ($X^-$) of the lithium salt may comprise one or more of $F^-$, $Cl^-$, $Br^-$, $I^-$, $NO_3^-$, $N(CN)_2^-$, $BF_4^-$, $ClO_4^-$, $PF_6^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$, and/or $(CF_3CF_2SO_2)_2N^-$, etc..

In some non-limiting embodiments, the electrolyte may further comprise a composite electrolyte comprising an organic polymer and an inorganic electrolyte.

In some non-limiting embodiments, the composite electrolyte may have a film form. In some non-limiting embodiments, the organic polymer and the inorganic electrolyte may form a composite membrane. For example, the organic polymer and the inorganic electrolyte may be physically bound within the composite membrane.

The organic polymer may be an ion conductive polymer. For example, the organic polymer may comprise repeating units of ether-based, styrene-based, or fluorinated hydrocarbon-based groups.

In some non-limiting embodiments, the organic polymer may comprise at least one selected from the group consisting of polyvinylidene fluoride (PVDF), polystyrene (PS), polyether sulfone (PES), polyurethane (PU), polyethylene oxide (PEO), polyvinylidene fluoride-co-hexafluoropropylene (PVDF-co-HFP), polyimide (PI), polymethyl methacrylate (PMMA), polyvinyl chloride (PVC), polyvinyl alcohol (PVA), polyacrylonitrile (PAN), polyethyl methacrylate (PEMA), polycaprolactone (PCL), and polyvinyl pyrrolidone (PVP). In some non-limiting embodiments, the organic polymer may comprise at least one selected from the group consisting of polyvinylidene fluoride, polystyrene, polyether sulfone, and polyurethane. Accordingly, the mobility of lithium ion conduction within the composite electrolyte may be improved, thereby enhancing ionic conductivity.

In some non-limiting embodiments, the inorganic electrolyte may be an oxide-based solid electrolyte. For

example, the oxide-based solid electrolyte may comprise an ion conductive compound comprising a metal or oxygen. For example, the oxide-based solid electrolytes may comprise LLTO compounds, LLZO compounds, LLZTO compounds such as $Li_{6.4}La_3Zr_{1.4}Ta_{0.6}O_{12}$, $Li_6La_2CaTa_2O_{12}$, $Li_6La_2ANb_2O_{12}$ (A is Ca or Sr), $Li_2Nd_3TeSbO_{12}$, $Li_3BO_{2.5}N_{0.5}$, $Li_9SiAlO_8$, LAGP compounds, LATP compounds, $Li_{1+x}Ti_{2-x}Al_xSi_y(PO_4)_3$ ($0 \leq x \leq 1$, $0 \leq y \leq 1$), $LiAl_xZr_{2-x}(PO_4)_3$ ($0 \leq x \leq 1$, $0 \leq y \leq 1$), $LiTi_xZr_{2-x}(PO_4)_3$ ($0 \leq x \leq 1$, $0 \leq y \leq 1$) LISICON compounds, LIPON compounds, perovskite compounds, NASICON compounds, and metal oxides such as $Al_2O_3$, $ZnO_2$, $Ce_2O_2$, $TiO_2$, $ZrO_2$, $HfO_2$, $MnO_2$, MgO, $WO_2$, and $V_2O_5$.

In one non-limiting embodiment, the inorganic electrolyte may be an oxide-based solid electrolyte comprising lithium. For example, the oxide-based solid electrolyte containing lithium may comprise a lithium lanthanum titanium oxide (LLTO) compound, a lithium lanthanum zirconium oxide (LLZO) compound (e.g., a garnet-type LLZO compound), a lithium lanthanum zirconium tantalum oxide (LLZTO) compound, a Na Superionic Conductor (NASICON) compound, a lithium aluminum titanium phosphate (LATP) compound, a perovskite compound, etc. Accordingly, the ionic conductivity and mechanical strength of the electrolyte may be improved, thereby suppressing lithium dendrite growth, and enhancing high-temperature stability and cycle life characteristics.

In some non-limiting embodiments, the content of the flame retardant compound may be 3% by weight ("wt%") to 60 wt%, 3 wt% to 49 wt%, 3 wt% to 30 wt%, 5 wt% to 30 wt%, or 5 wt% to 25 wt% based on the total weight of the electrolyte. Within the above range, the ionic conductivity and flame retardancy of the electrolyte may be further improved.

In some non-limiting embodiments, the content of the flame retardant compound may be 5 wt% to 20 wt%, 7 wt% to 20 wt%, or 10 wt% to 20 wt% based on the total weight of the electrolyte. Within the above range, the flame retardancy and ionic conductivity of the electrolyte may be further improved.

In some non-limiting embodiments, pores may be formed in the composite membrane. Accordingly, the flame retardant compound may be positioned in the pores of the composite membrane. As a result, the ionic conductivity and flame retardancy of the electrolyte may be improved, and the resistance may be reduced.

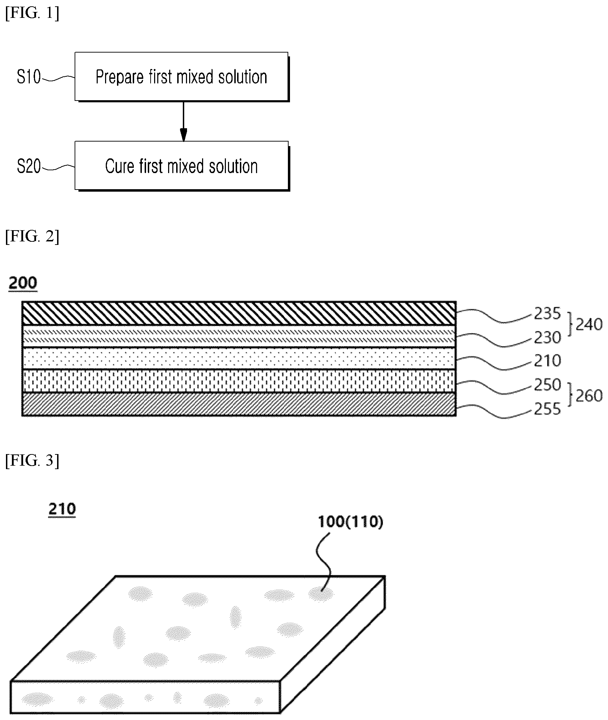

FIG. 1 is a flowchart for describing processes of a method of preparing an electrolyte for a secondary battery according to some non-limiting embodiments. Hereinafter, the method of preparing the above-described electrolyte for a secondary battery will be described with reference to FIG. 1.

Referring to FIG. 1, a first mixed solution comprising the above-described electrolyte monomer and electrolyte solution may be prepared (e.g., step S10).

In some non-limiting embodiments, the above-described electrolyte monomer and electrolyte solution may be mixed to prepare the first mixed solution.

In some non-limiting embodiments, the first mixed solution may further comprise an organic polymer and an inorganic electrolyte. For example, the first mixed solution may comprise an electrolyte monomer, an electrolyte solution, an organic polymer and an inorganic electrolyte.

In some non-limiting embodiments, the organic polymer and the inorganic electrolyte may be mixed with the electrolyte monomer and the electrolyte solution in the form of a composite electrolyte membrane.

The composite electrolyte membrane may be prepared by drying a second mixed solution comprising the organic polymer, the inorganic electrolyte, a first solvent and a second solvent.

In some non-limiting embodiments, the solubility of the organic polymer in the first solvent may be greater than that of the organic polymer in the second solvent. For example, the solubility of the organic polymer in the first solvent may be 1 g/100 g or more, 33 g/100 g or more, 10 g/100 g or more, 100 g/100 g or more, or 100 g/100 g to 1,000 g/100 g. For example, the solubility of the organic polymer in the second solvent may be less than 1 g/100 g, less than 0.1 g/100 g, or less than 0.01 g/100 g.

In some non-limiting embodiments, the organic polymer in the first mixed solution may be dissolved in the first solvent, and may not be dissolved in the second solvent.

For example, the organic polymer may be soluble in the first solvent. Accordingly, the organic polymer may be dissolved in the first solvent.

For example, the organic polymer may be insoluble in the second solvent. Accordingly, the organic polymer may not be substantially dissolved in the second solvent.

In some non-limiting embodiments, the first solvent may be miscible with the second solvent. For example, the first solvent and the second solvent may be mixed or blended.

The organic polymer and the inorganic electrolyte may be the above-described organic polymer and inorganic electrolyte.

The first solvent may be a solvent that dissolves the organic polymer and may be miscible with the second solvent. The first solvent may comprise, for example, tetrahydrofuran (THF), 2-methyltetrahydrofuran (2-Me-THF), N-methyl-2-pyrrolidone (NMP), 1,3-dioxolane, and/or vinylene carbonate (VC), etc. These may be used alone or in combination of two or more thereof. In some non-limiting embodiments, the first solvent may be tetrahydrofuran.

The second solvent may be a solvent that does not dissolve the organic polymer and may be miscible with the first solvent. The second solvent may comprise, for example, heptane, octane, nonane, decane, dodecane, and/or 2,2,4-trimethylpentane and the like. These may be used alone or in combination of two or more thereof. In some non-limiting

embodiments, the second solvent may be octane.

The drying may be performed by casting the first mixed solution onto a substrate (e.g., a glass substrate, a plastic substrate, etc.).

In some non-limiting embodiments, drying the first mixed solution to prepare a composite membrane may comprise removing the first solvent and the second solvent from the first mixed solution.

In some non-limiting embodiments, drying the second mixed solution may comprise removing the first solvent at a first temperature and removing the second solvent at a second temperature. For example, the first solvent in the second mixed solution may be dried, and then the second solvent may be dried to prepare a composite electrolyte membrane. The first drying and the second drying may be performed sequentially, or the second drying may be performed after a certain period of time has passed after the first drying. Accordingly, the first solvent may be dried first, and then the second solvent may be dried.

In some non-limiting embodiments, the content of the electrolyte monomer may be 3 wt% to 60 wt%, 3 wt% to 49 wt%, 3 wt% to 30 wt%, 5 wt% to 30 wt%, or 5 wt% to 25 wt% based on the total weight of the first mixed solution. Within the above range, the ionic conductivity of the electrolyte may be improved, while the flame retardancy may be enhanced.

In one non-limiting embodiment, the content of the electrolyte monomer may be 5 wt% to 20 wt%, 7 wt% to 20 wt%, or 10 wt% to 20 wt% based on the total weight of the first mixed solution. Within the above range, the ionic conductivity of the electrolyte may be improved, while the flame retardancy of the electrolyte may be further enhanced.

In some non-limiting embodiments, the above-described electrolyte monomer may comprise both a thermally or photoreactive functional group and a phosphorus-containing functional group.

In some non-limiting embodiments, the electrolyte solution may comprise a thermal initiator and/or a photo-initiator to induce thermal curing and/or photocuring of the first mixed solution. In some non-limiting embodiments, the content of the thermal initiator and/or the photo-initiator may be 0.5 parts by weight ("wt parts") to 2 wt parts based on 100 wt parts of the first mixed solution comprised in each electrolyte composition.

For example, the thermal initiator may comprise azo compounds such as 2,2-azobis(2-cyanobutane), 2,2-azobis(methylbutyronitrile), 2,2'-azobisobutyronitrile (AIBN), azobisdimethylvaleronitrile (AMVN), dimethyl 2,2'-azo-bis(2-methylpropionate), 2,2'-azobis(2,4-dimethylvaleronitrile), etc., or peroxide compounds such as benzoyl peroxide, acetyl peroxide, dilauryl peroxide, di-tert-butyl peroxide, cumyl peroxide, and/or hydrogen peroxide, etc.

For example, the photo-initiator may comprise acyl phosphines such as 2-hydroxy-2-methyl-1-phenylpropan-1-one (HMPP), benzoin ether, dialkyl acetophenone, hydroxyalkyl ketone, phenyl glyoxylate, benzyl dimethyl ketal, 2,4,6-trimethyl-benzoyl-trimethyl phosphine oxide, etc., and/or $\alpha$-aminoketones.

In some non-limiting embodiments, the electrolyte solution may comprise the above-described lithium salt. Accordingly, the ionic conductivity of the electrolyte for a secondary battery may be improved.

In some non-limiting embodiments, the electrolyte solution may comprise an organic solvent. For example, the organic solvent may comprise carbonate organic solvents such as propylene carbonate (PC), ethylene carbonate (EC), diethyl carbonate (DEC), dimethyl carbonate (DMC), ethyl methyl carbonate (EMC), methyl propyl carbonate (MPC), dipropyl carbonate (DPC), and/or vinylene carbonate (VC), etc.; or solvents such as dimethyl sulfoxide, acetonitrile, dimethoxyethane, diethoxyethane, sulfolane, gamma-butyrolactone, propylene sulfite and/or tetrahydrofuran. These may be used alone or in combination of two or more thereof.

In some non-limiting embodiments, the organic solvent may be a carbonate-based organic solvent. Accordingly, the electrical stability and chemical stability of the electrolyte for a secondary battery may be further improved.

In some non-limiting embodiments, the electrolyte solution may further comprise one or more additive(s). The additive may comprise a cyclic carbonate compound, a fluorine-substituted cyclic carbonate compound, a sultone compound, a cyclic sulfate compound, a cyclic sulfite compound, a phosphate compound, and/or a borate compound and the like.

In some non-limiting embodiments, the cyclic carbonate compound may comprise vinylene carbonate, and/or vinyl ethylene carbonate (VEC), etc.

In some non-limiting embodiments, the fluorine-substituted cyclic carbonate compound may comprise fluoroethylene carbonate (FEC), etc.

In some non-limiting embodiments, the sultone compound may comprise 1,3-propane sultone, 1,3-propene sultone, and/or 1,4-butane sultone, etc.

In some non-limiting embodiments, the cyclic sulfate compound may comprise 1,2-ethylene sulfate, and/or 1,2-propylene sulfate, etc.

In some non-limiting embodiments, the cyclic sulfite compound may comprise ethylene sulfite, and/or butylene sulfite, etc.

In some non-limiting embodiments, the phosphate compound may comprise lithium difluoro bis(oxalato) phosphate, and/or lithium difluoro phosphate, etc.

In some non-limiting embodiments, the borate compound may comprise lithium bis(oxalate) borate, etc.

According to some non-limiting embodiments, the first mixed solution may be cured (e.g., step S20). Accordingly,

an electrolyte for a secondary battery may be prepared.

In some non-limiting embodiments, a polymer or copolymer of the electrolyte monomer may be formed during the curing of the first mixed solution. Accordingly, the electrolyte for a secondary battery may comprise a flame retardant compound comprising a polymer or copolymer of the electrolyte monomer.

In some non-limiting embodiments, the weight change (decrease or increase) during the curing of the first mixed solution may be 0.0001 wt%, or 0.00001 wt% or less based on the total weight of the electrolyte monomer. Accordingly, the content of the electrolyte monomer comprised in the first mixed solution may be substantially the same as the content of the flame retardant compound comprised in the electrolyte.

In some non-limiting embodiments, the first mixed solution may be cured through heat treatment. Accordingly, the electrolyte monomer comprised in the first mixed solution may be polymerized or copolymerized to form a flame retardant compound.

In some non-limiting embodiments, the heat treatment temperature may be 40 °C to 160 °C, 60 °C to 160 °C, 80 °C to 160 °C, 80 °C to 140 °C, or 80 °C to 120 °C. In some non-limiting embodiments, the heat treatment temperature may be increased from room temperature (e.g., 25 °C) at a rate of 1 °C/min to 10 °C/min, 2 °C/min to 10 °C/min, or 3 °C/min to 10 °C/min.

In some non-limiting embodiments, the heat treatment time may be 5 minutes to 12 hours, 5 minutes to 6 hours, 10 minutes to 6 hours, or 10 minutes to 3 hours.

Within the above temperature and time ranges, the electrolyte monomer comprised in the first mixed solution may be sufficiently polymerized or copolymerized.

In some non-limiting embodiments, the first mixed solution may be cured by light irradiation. Accordingly, the electrolyte monomer comprised in the first mixed solution may be polymerized or copolymerized at a relatively low temperature. Accordingly, side reactions of the electrolyte, or the like caused by high-temperature heat treatment may be prevented.

In some non-limiting embodiments, the light may have a wavelength of 250 nm to 400 nm.

In some non-limiting embodiments, the light may have an intensity of 800 $mW/cm^2$ to 1100 $mW/cm^2$.

In some non-limiting embodiments, the light irradiation time may be 5 seconds to 10 minutes, 5 seconds to 5 minutes, or 5 seconds to 3 minutes.

Within the above wavelength and intensity ranges, the electrolyte monomer comprised in the first mixed solution may be sufficiently polymerized or copolymerized.

FIG. 2 is a schematic cross-sectional view illustrating an electrode cell according to some non-limiting embodiments.

The secondary battery according to some non-limiting embodiments may comprise an electrode cell. Referring to FIG. 2, the electrode cell may comprise a cathode 240, an anode 260 disposed to face the cathode 240, and an electrolyte layer 210 disposed between the cathode 240 and the anode 260.

The cathode 240 may comprise a cathode current collector 235 and a cathode active material layer 230 disposed on at least one surface of the cathode current collector 235.

The cathode current collector 235 may comprise stainless steel, nickel, aluminum, titanium, or an alloy thereof. The cathode current collector 235 may also comprise aluminum or stainless steel having a surface treated with carbon, nickel, titanium or silver. The cathode current collector 235 may have a thickness of, for example, 10 μm to 50 μm, but it is not limited thereto.

The cathode active material may comprise a compound capable of reversibly intercalating and deintercalating lithium ions.

According to some non-limiting embodiments, the cathode active material may comprise a lithium-nickel metal oxide. The lithium-nickel metal oxide may further comprise at least one selected from the group consisting of cobalt (Co), manganese (Mn) and aluminum (Al).

In some non-limiting embodiments, the cathode active material or the lithium-nickel metal oxide may comprise a layered structure or a crystal structure represented by Formula 6 below.

[Formula 6] $$Li_xNi_aM_bO_{2+2}$$

In Formula 6, x, a, b and z may satisfy $0.9 \le x \le 1.2$, $0.6 \le a \le 0.99$, $0.01 \le b \le 0.4$, and $-0.5 \le z \le 0.1$. As described above, M may comprise Co, Mn and/or Al.

The chemical structure represented by Formula 6 indicates a bonding relationship between elements comprised in the layered structure or crystal structure of the cathode active material, and does not exclude other additional elements. For example, M comprise Co and/or Mn, and Co and/or Mn may be provided as main active elements of the cathode active material together with Ni. Here, it should be understood that Formula 6 is provided to express the bonding relationship between the main active elements, and is a formula encompassing the introduction and substitution of additional elements.

In some non-limiting embodiments, the cathode active material may further comprise auxiliary element(s) which are added to the main active elements, in order to enhance chemical stability thereof or the layered structure/crystal structure. The auxiliary element(s) may be incorporated into the layered structure/crystal structure together with the main active elements to form a bond, and it should be understood that this case is also comprised within the chemical structure range represented by Formula 6.

The auxiliary element may comprise, for example, at least one of Na, Mg, Ca, Y, Ti, Hf, V, Nb, Ta, Cr, Mo, W, Fe, Cu, Ag, Zn, B, Al, Ga, C, Si, Sn, Sr, Ba, Ra, P and/or Zr. The auxiliary element may serve as an auxiliary active element which contributes to the capacity/output activity of the cathode active material together with Co or Mn, such as Al.

For example, the cathode active material or the lithium-nickel metal oxide may comprise a layered structure or crystal structure represented by Formula 6-1 below.

[Formula 6-1] $Li_xNi_aM1_{b1}M2_{b2}O_{2+z}$

In Formula 6-1, M1 may comprise Co, Mn and/or Al. M2 may comprise the above-described auxiliary elements. In Formula 6-1, x, a, b1, b2 and z may satisfy $0.9 \le x \le 1.2$, $0.6 \le a \le 0.99$, $0.01 \le b1+b2 \le 0.4$, and $-0.5 \le z \le 0.1$.

The cathode active material may further comprise a coating element and/or a doping element. For example, elements which are substantially the same as or similar to the above-described auxiliary elements may be used as the coating element and/or the doping element. For example, the above-described elements may be used alone or in combination of two or more thereof as the coating element or the doping element.

The coating element and/or the doping element may exist on the surface of the lithium-nickel metal oxide particles, or may penetrate through the surface of the lithium-nickel metal composite oxide particles to become incorporated into the bonding structure represented by Formula 6 or 6-1 above.

The cathode active material may comprise a nickel-cobalt-manganese (NCM)-based lithium oxide. In this case, an NCM-based lithium oxide with an increased content of nickel may be used.

Ni may be provided as a transition metal associated with the output and capacity of the lithium secondary battery. Therefore, as described above, by employing a high-nickel-content (high-Ni) composition in the cathode active material, a high-capacity cathode and a high-capacity lithium secondary battery may be provided.

In this regard, as the content of Ni increases, long-term storage stability and cycle life stability of the cathode or the secondary battery may be relatively reduced, and side reactions with the electrolyte may also increase. However, according to some non-limiting embodiments, by comprising Co, the cycle life stability and capacity retention characteristics may be improved through Mn while maintaining electrical conductivity.

The content of Ni (e.g., a molar fraction of nickel based on the total moles of nickel, cobalt and manganese) in the NCM-based lithium oxide may be 0.6 or more, 0.7 or more, or 0.8 or more. In some non-limiting embodiments, the content of Ni may be 0.8 to 0.95, 0.82 to 0.95, 0.83 to 0.95, 0.84 to 0.95, 0.85 to 0.95, or 0.88 to 0.95.

In some non-limiting embodiments, the cathode active material may comprise a lithium cobalt oxide-based active material, a lithium manganese oxide-based active material, a lithium nickel oxide-based active material, and/or a lithium iron phosphate (LFP)-based active material (e.g., $LiFePO_4$).

In some non-limiting embodiments, the cathode active material may comprise, for example, a manganese (Mn)-rich active material having a chemical structure or crystal structure represented by Formula 7 below, a lithium (Li)-rich layered oxide (LLO)/over lithiated oxide (OLO)-based active material, and/or a cobalt (Co)-less active material.

[Formula 7] $p[Li_2MnO_3]\cdot(1-p)[Li_qJO_2]$

In Formula 7, p and q may satisfy $0<p<1$, and $0.9 \le q \le 1.2$, and J may comprise at least one element among Mn, Ni, Co, Fe, Cr, V, Cu, Zn, Ti, Al, Mg and/or B.

In some non-limiting embodiments, the cathode active material may be a sodium-based active material and/or a potassium-based active material. The sodium-based active material may comprise a layered structure or a crystal structure in which Li of Formula 6, Formula 6-1, and/or Formula 7, described above, is substituted with Na and/or K.

In some non-limiting embodiments, the cathode active material may be a calcium-based active material. The calcium-based active material may comprise, for example, a calcium-cobalt active material and/or a calcium-phosphate active material.

For example, a cathode slurry may be prepared by mixing the cathode active material in a solvent. The cathode current collector may be coated with the cathode slurry, and then dried and roll-pressed to prepare the cathode active material layer. The coating process may be performed using methods such as gravure coating, slot die coating, simultaneous multilayer die coating, imprinting, doctor blade coating, dip coating, bar coating or casting, etc., but it is not limited thereto. The cathode active material layer may further comprise a binder, and optionally may further comprise the electrolyte, a conductive material, a thickener or the like.

Solvents used in the preparation of the cathode active material layer 230 may comprise, for example, N-methyl-2-pyrrolidone (NMP), dimethylformamide (DMF), dimethylacetamide (DMA), N,N-dimethylaminopropylamine (DMAPA), ethylene oxide (EO), tetrahydrofuran (THF), etc.

In one non-limiting embodiment, the electrolyte comprised in the cathode active material layer 230 may be the above-described electrolyte for a secondary battery. In one non-limiting embodiment, the electrolyte comprised in the cathode active material may be the above-described inorganic electrolyte. For example, the secondary battery may be provided as an all-solid-state battery comprising the above-described electrolyte or inorganic electrolyte.

The binder may comprise polyvinylidene fluoride (PVDF), poly(vinylidene fluoride-co-hexafluoropropylene), polyacrylonitrile, polymethylmethacrylate, acrylonitrile butadiene rubber (NBR), polybutadiene rubber (BR), and/or styrene-butadiene rubber (SBR), etc. In one non-limiting embodiment, a PVDF-based binder may be used as the cathode binder.

The conductive material may be added to the cathode active material layer 230 in order to enhance the conductivity thereof and/or the mobility of lithium ions or electrons. For example, the conductive material may further comprise carbon-based conductive materials such as graphite, carbon black, acetylene black, Ketjen black, graphene, carbon nanotubes, vapor-grown carbon fibers (VGCFs), carbon fibers and/or metal-based conductive materials, comprising perovskite materials, such as tin, tin oxide, titanium oxide, $LaSrCoO_3$, and $LaSrMnO_3$, but it is not limited thereto.

The cathode active material layer 230 may further comprise a thickener and/or a dispersant. In one non-limiting embodiment, the cathode active material layer 230 may comprise a thickener such as carboxymethyl cellulose (CMC).

The anode 260 may comprise an anode current collector 255 and an anode active material layer 250 disposed on at least one surface of the anode current collector 255.

The anode current collector 255 may comprise, for example, a copper foil, a nickel foil, a stainless steel foil, a titanium foil, a nickel foam, a copper foam, a polymer substrate coated with a conductive metal, and/or the like. In some non-limiting embodiments, the anode current collector 255 may have a thickness of, for example, 10 $\mu$m to 50 $\mu$m, but it is not limited thereto.

The anode active material layer 250 may comprise an anode active material. A material capable of intercalating and deintercalating lithium ions may be used as the anode active material. In some non-limiting embodiments, the anode active material may comprise carbon-based materials such as crystalline carbon, amorphous carbon, a carbon composite, and/or carbon fibers, etc.; lithium metal; a lithium alloy; a silicon (Si)-containing material and/or a tin (Sn)-containing material, etc.

In some non-limiting embodiments, the amorphous carbon may comprise hard carbon, soft carbon, coke, mesocarbon microbead (MCMB), mesophase pitch-based carbon fiber (MPCF) and/or the like.

In some non-limiting embodiments, the crystalline carbon may comprise graphite-based carbons such as natural graphite, artificial graphite, graphitized coke, graphitized MCMB, and/or graphitized MPCF, etc.

The lithium metal may comprise pure lithium metal or lithium metal having a protective layer formed thereon for suppressing dendrite growth, etc. In one non-limiting embodiment, a lithium metal-containing layer deposited or coated on the anode current collector may be used as the anode active material layer. In one non-limiting embodiment, a lithium thin-film layer may be used as the anode active material layer.

Elements comprised in the lithium alloy may comprise aluminum, zinc, bismuth, cadmium, antimony, silicon, lead, tin, gallium, indium, etc.

The silicon-containing material may provide more enhanced capacity characteristics. The silicon-containing material may comprise Si, $SiO_x$ ($0<x<2$), metal-doped $SiO_x$ ($0<x<2$), a silicon-carbon composite, etc. The metal may comprise lithium and/or magnesium, and the metal-doped $SiO_x$ ($0<x<2$) may comprise a metal silicate.

For example, an anode slurry may be prepared by mixing the anode active material in a solvent. The anode slurry may be applied/deposited to the anode current collector, then dried and roll-pressed to prepare the anode active material layer. The coating process may be performed using substantially the same method as the method of preparing the cathode active material layer. The anode active material layer may further comprise a binder, and optionally may further comprise the electrolyte, a conductive material, a thickener, etc.

In some non-limiting embodiments, the anode 260 may comprise the anode active material layer 250 in the form of a lithium metal formed through a deposition/coating process.

The solvent for the anode active material layer may comprise, for example, water, pure water, deionized water, distilled water, ethanol, isopropanol, methanol, acetone, n-propanol, t-butanol, etc.

In one non-limiting embodiment, the electrolyte comprised in the anode active material layer 250 may be the above-described electrolyte for a secondary battery. In one non-limiting embodiment, the electrolyte comprised in the anode active material layer 250 may be the above-described inorganic electrolyte. For example, the secondary battery may be provided as an all-solid-state battery comprising the above-described electrolyte or inorganic electrolyte.

The above-described materials that can be used when fabricating the cathode as the binder, conductive material and thickener may also be used.

In some non-limiting embodiments, a styrene-butadiene rubber (SBR)-based binder, carboxymethyl cellulose, polyacrylic acid-based binder, poly(3,4-ethylenedioxythiophene (PEDOT)-based binder, and the like may be used as an

anode binder.

FIG. 3 is a schematic perspective view illustrating the structure of an electrolyte layer for a secondary battery according to some non-limiting embodiments.

Referring to FIG. 3, the electrolyte layer 210 may comprise the above-described electrolyte 100. For example, the electrolyte layer 210 may comprise the flame retardant compound 110 comprised in the electrolyte 100. For example, the electrolyte layer 210 may comprise a membrane formed by impregnating a separation membrane with the above-described first mixed solution and curing the same. The electrolyte layer 210 may be a separation membrane comprising an electrolyte.

According to some non-limiting embodiments, the electrolyte layer 210 may be interposed between the cathode 240 and the anode 260. For example, the electrolyte layer 210 may be a solid electrolyte layer comprising the above-described electrolyte.

According to some non-limiting embodiments, an electrode cell 200 is defined by the cathode 240, the anode 260, and the electrolyte layer 210, and a plurality of electrode cells 200 may be stacked to form an electrode assembly. For example, the electrode assembly may be formed by winding, stacking, folding, or the like.

For example, electrode tabs (cathode tabs and anode tabs) may protrude from the cathode current collector 235 and the anode current collector 255, respectively, and may extend to one side of a case. The electrode tabs may be fused together with the one side of the case and connected to electrode leads (a cathode lead and an anode lead) that extend or are exposed to the outside of the case.

For example, a pouch-type case, a prismatic case, a cylindrical case, or a coin-type case, etc. may be used as the case.

The invention relates also to the following numbered aspects:

Aspect 1. A monomer for an electrolyte comprising a compound represented by Formula 1 below:

[Formula 1]

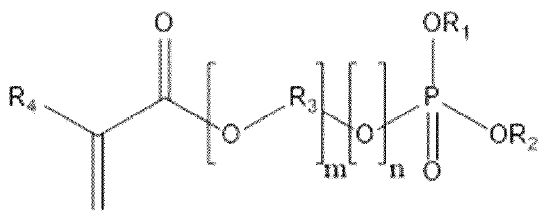

wherein in Formula 1, $R_1$ and $R_2$ are each independently a substituted or unsubstituted C1 to C12 alkyl group, or a substituted or unsubstituted C6 to C12 aromatic hydrocarbon group, $R_1$ and $R_2$ may be linked to each other to form a ring,

$R_3$ is a substituted or unsubstituted C1 to C5 alkylene group,
$R_4$ is hydrogen or a C1 to C5 alkyl group,
m is 1 to 5, and n is 0 or 1.

Aspect 2. The monomer for an electrolyte according to aspect 1, wherein $R_1$ and $R_2$ are each independently a substituted or unsubstituted C1 to C10 alkyl group, or a substituted or unsubstituted C6 to C10 aromatic hydrocarbon group, $R_1$ and $R_2$ may be linked to each other to form a ring,

$R_3$ is a C2 alkylene group,
$R_4$ is hydrogen or a C1 to C3 alkyl group, and
m is 1 to 3.

Aspect 3. The monomer for an electrolyte according to aspect 1 or 2, wherein m is 1.

Aspect 4. The monomer for an electrolyte according to any one of aspects 1 to 3, wherein n is 1, $R_1$ and $R_2$ are each independently a substituted or unsubstituted C6 to C10 aryl group, or a substituted or unsubstituted C1 to C7 alkyl group, and $R_3$ is a substituted or unsubstituted C1 to C3 alkylene group; or
n is 0, $R_1$ and $R_2$ are each independently a substituted or unsubstituted C1 to C7 alkyl group, and $R_3$ is a substituted or unsubstituted C1 to C3 alkylene group.

Aspect 5. The monomer for an electrolyte according to any one of aspects 1 to 4, wherein n is 1, $R_1$ and $R_2$ are each independently an unsubstituted C6 to C10 aryl group, or an unsubstituted C1 to C5 alkyl group, and $R_3$ is an

unsubstituted C2 alkylene group; or

n is 0, $R_1$ and $R_2$ are each independently an unsubstituted C1 to C5 alkyl group, and $R_3$ is an unsubstituted C2 alkylene group.

Aspect 6. The monomer for an electrolyte according to any one of aspects 1 to 5, wherein the monomer for an electrolyte comprises at least one selected from the group consisting of compounds represented by Formulas 2 to 4 below:

[Formula 2]

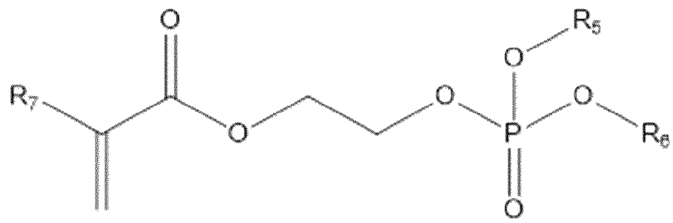

wherein in Formula 2, $R_5$ and $R_6$ are each independently hydrogen, a substituted or unsubstituted C1 to C5 alkyl group, or a substituted or unsubstituted C6 to C10 aryl group, and $R_7$ is hydrogen or a C1 to C3 alkyl group),

[Formula 3]

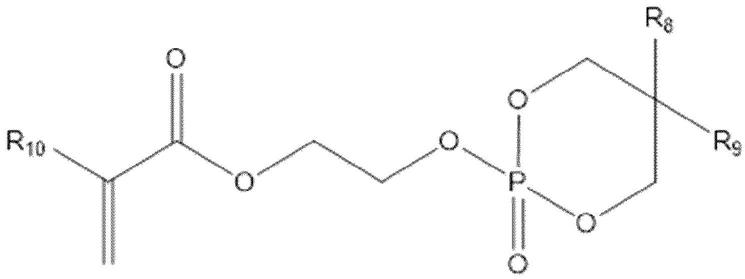

wherein in Formula 3, $R_8$ and $R_9$ are each independently hydrogen, or a substituted or unsubstituted C1 to C3 alkyl group, and $R_{10}$ is hydrogen or a C1 to C3 alkyl group,

[Formula 4]

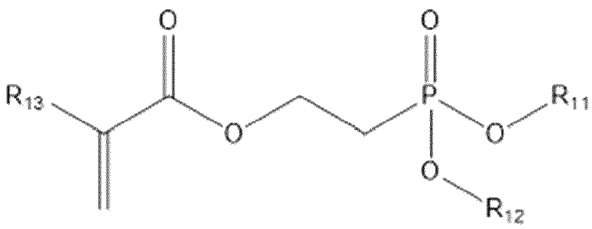

wherein in Formula 4, $R_{11}$ and $R_{12}$ are each independently hydrogen, or a substituted or unsubstituted C1 to C5 alkyl group, and $R_{13}$ is hydrogen or a C1 to C3 alkyl group.

Aspect 7. The monomer for an electrolyte according to aspect 6, wherein the compound represented by Formula 1 comprises at least one selected from the group consisting of compounds represented by Formulas 2-1, 2-2, 3-1 and 4-1 below:

[Formula 2-1]

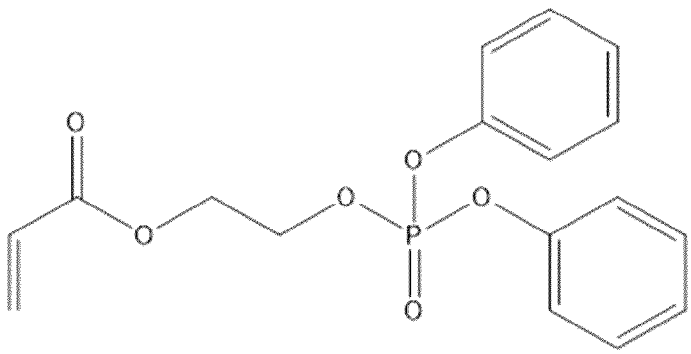

[Formula 2-2]

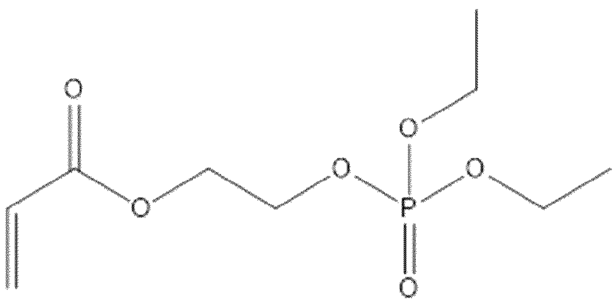

[Formula 3-1]

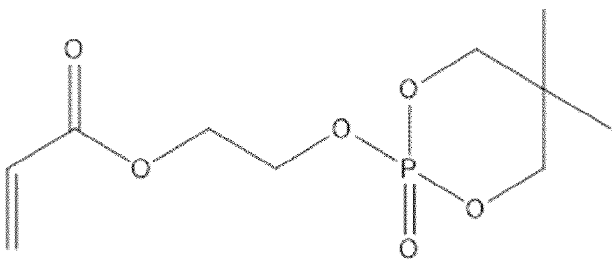

[Formula 4-1]

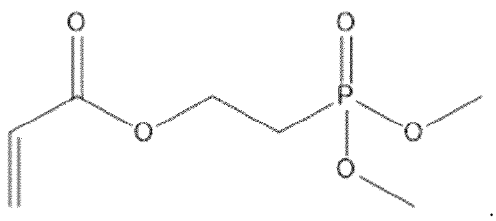

and

Aspect 8. The monomer for an electrolyte according to aspect 6 or 7, wherein the monomer for an electrolyte comprises at least one of the compound represented by Formula 3 above and the compound represented by Formula 4 above; and the compound represented by Formula 2 above, or the monomer for an electrolyte comprises the compound represented by Formula 2 above and the compound represented by Formula 4 above.

Aspect 9. An electrolyte for a secondary battery comprising:

a flame retardant compound comprising a polymer formed by polymerizing the monomer for an electrolyte

according to any one of aspects 1 to 8; and
a lithium salt.

Aspect 10. The electrolyte for a secondary battery according to aspect 9, wherein the content of the flame retardant compound is 3% by weight to 60% by weight based on the total weight of the electrolyte for the secondary battery.
Aspect 11. A lithium secondary battery comprising:

a cathode;
an anode disposed to face the cathode; and
an electrolyte layer disposed between the cathode and the anode, and comprising the electrolyte for a secondary battery according to aspect 9 or 10.

Aspect 12. A method of preparing an electrolyte for a secondary battery, comprising:

preparing a first mixed solution comprising the monomer for an electrolyte according to any one of aspects 1 to 8 and an electrolyte solution; and
curing the first mixed solution.

Aspect 13. The method of preparing an electrolyte for a secondary battery according to aspect 12, wherein the first mixed solution further comprises an organic polymer and an inorganic electrolyte.
Aspect 14. The method of preparing an electrolyte for a secondary battery according to aspect 12 or 13, wherein the content of the monomer for an electrolyte is 3% by weight to 60% by weight based on the total weight of the first mixed solution.
Aspect 15. The method of preparing an electrolyte for a secondary battery according to any one of aspects 12 to 14, wherein the first mixed solution further comprises a thermal initiator or a photo-initiator, and
the step of curing the first mixed solution comprises heat-treating the first mixed solution or irradiating the first mixed solution with light.

## Examples and Comparative Examples

### Example 1

(1) Preparation of electrolyte monomer

100 mL of dichloromethane, 2.9 g (24.12 mmol) of 2-hydroxyethyl acrylate, and 2.93 g (28.95 mmol) of triethylamine were introduced into a reactor to prepare a mixed solution.
After cooling the reactor to 0 °C, 6.45 g (24.12 mmol) of diphenyl chlorophosphate was added to the mixed solution over 10 minutes.
Thereafter, the solution was stirred at room temperature (25 °C) for 24 hours, washed three times with water ($H_2O$), and then dried under reduced pressure to remove the solvent, thereby preparing a concentrated solution.
The concentrated solution was purified by column chromatography using hexane and ethyl acetate to obtain 6.5 g (yield: 77.4%) of an electrolyte monomer.
The obtained electrolyte monomer was the compound represented by Formula 2-1 above.

(2) Preparation of first mixed solution

As an electrolyte monomer, the compound represented by Formula 2-1 above and trimethylolpropane triacrylate (TMPTA) were mixed with a 1.0 M LiPF6 solution (a mixed solvent of EC/EMC in a volume ratio of 3:7) to prepare a first mixed solution.
The content of the electrolyte monomer based on the total weight of the first mixed solution was 15 wt% (7.5 wt% of the compound represented by Formula 2-1 above and 7.5 wt% of TMPTA), and the electrolyte monomer was used by mixing the compound represented by Formula 2-1 above and TMPTA in a weight ratio of 1:1.

(3) Manufacture of lithium secondary battery

A cathode slurry was prepared by mixing $LiNi_{0.6}Co_{0.2}Mn_{0.2}O_2$ as a cathode active material, polyvinylidene fluoride (PVDF) as a binder, and carbon black as a conductive material in a weight ratio of 90:5:5. The cathode slurry was uniformly applied to an aluminum foil, and then dried and roll-pressed to fabricate a cathode.

An anode slurry was prepared by mixing natural graphite as an anode active material, SBR/CMC as a binder, and carbon black as a conductive material in a weight ratio of 96:3:1. The anode slurry was uniformly applied to a copper (Cu) foil, then dried and roll-pressed to fabricate an anode.

Polyethylene (PE) was prepared as a separation membrane. The cathode and the anode were placed so that they faced each other with the separation membrane interposed therebetween, and a tab portion of the cathode and a tab portion of the anode were welded respectively.

An assembly of the welded cathode/separation membrane/anode was put into a pouch, followed by sealing three sides of the pouch except for one side through which the first mixed solution as the electrolyte for a secondary battery is injected. At this time, a portion having the tab was included in the sealing portion. After injecting the first mixed solution through the remaining open side, and the remaining open side was also sealed, followed by allowing it to be impregnated for 12 hours or more. Thereafter, a secondary battery comprising the electrolyte for a secondary battery was manufactured by heat curing in an oven at 100 °C for 1 hour.

## Examples 2 to 11

Lithium secondary batteries were manufactured in the same manner as in Example 1, except that the type and content of the electrolyte monomer were changed as shown in Table 1 below, during the preparation of the electrolyte for a secondary battery.

## Comparative Example 1

A cathode slurry was prepared by mixing $LiNi_{0.6}Co_{0.2}Mn_{0.2}O_2$ as a cathode active material, polyvinylidene fluoride (PVDF) as a binder, and carbon black as a conductive material in a weight ratio of 90:5:5. The cathode slurry was uniformly applied to an aluminum foil, then dried and roll-pressed to fabricate a cathode.

An anode slurry was prepared by mixing natural graphite as an anode active material, SBR/CMC as a binder, and carbon black as a conductive material in a weight ratio of 96:3:1. The anode slurry was uniformly applied to a Cu foil, followed by drying and roll-pressing to fabricate an anode.

Polyethylene (PE) was prepared as a separation membrane. The cathode and the anode were positioned facing each other with the separation membrane in between, and the tab portion of the cathode and the tab portion of the anode were welded respectively.

An assembly of the welded cathode/separation membrane/anode was put into a pouch, followed by sealing three sides of the pouch except for one side for electrolyte injection. At this time, a portion having the tab was included in the sealing portion. After injecting the electrolyte through the remaining one side, and the remaining one side was also sealed, followed by allowing it to be impregnated for 12 hours or more to manufacture a secondary battery.

A solution, prepared by dissolving 1.0 M $LiPF_6$ in a mixed solvent of EC/EMC (3/7; volume ratio), was used as the electrolyte.

## Comparative Example 2

A secondary battery was manufactured in the same manner as Example 1, except that the type of electrolyte monomer was changed as shown in Table 1 below, during the preparation of the electrolyte for a secondary battery.

## Preparation of electrolyte monomers according to examples

### (1) Preparation of compound (electrolyte monomer) represented by Formula 3-1

100 mL of dichloromethane, 4.82 g (41.52 mmol) of 2-hydroxyethyl acrylate, and 5.04 g (49.82 mmol) of triethylamine were introduced into a reactor to prepare a mixed solution.

After cooling the reactor to 0 °C, 7.16 g (41.52 mmol) of diethyl chlorophosphate was added to the mixed solution over 10 minutes.

Thereafter, the solution was stirred at room temperature (25 °C) for 24 hours, washed three times with water ($H_2O$), and then dried under reduced pressure to remove the solvent, thereby preparing a concentrated solution.

The concentrated solution was purified by column chromatography using hexane and ethyl acetate to obtain 5.87 g (yield: 56.1%) of an electrolyte monomer.

The obtained electrolyte monomer was the compound represented by Formula 3-1 above.

(2) Preparation of compound (monomer for electrolyte) represented by Formula 2-2

100 mL of tetrahydrofuran (THF), 10 g (96.02 mmol) of 2,2-dimethyl-1,3-propanediol, and 24.3 g (240.04 mmol) of triethylamine were introduced into a reactor to prepare a mixed solution.

After cooling the reactor to 0 °C, 14.73 g (96.02 mmol) of phosphoryl chloride was added to the mixed solution over 30 minutes. The mixture was stirred at room temperature (25 °C) for 3 hours.

Thereafter, triethylamine hydrochloride salt was removed by filtration, and tetrahydrofuran (THF) was removed by drying under reduced pressure to obtain a first concentrate.

The first concentrate was dissolved in 100 mL of dichloromethane, washed twice with water ($H_2O$), and the solvent was removed by drying under reduced pressure to obtain a second concentrate.

The second concentrate was washed with hexane and water ($H_2O$), filtered, and then vacuum-dried to obtain 12.16 g (yield: 68.6%) of an intermediate.

After dissolving the intermediate in 100 mL of dichloromethane, 10 g (98.83 mmol) of triethylamine and 7.65 g (65.89 mmol) of hydroxyethyl acrylate were added. The mixture was stirred at room temperature (25 °C) for 36 hours.

Thereafter, the mixture was washed once each with 1 M aqueous hydrogen chloride (HCl), 1 M aqueous sodium bicarbonate ($NaHCO_3$), and water ($H_2O$), and purified by column chromatography using hexane and ethyl acetate to obtain 5.74 g (yield: 33.1%) of an electrolyte monomer.

The obtained electrolyte monomer was the compound represented by Formula 2-2 above.

(3) Preparation of compound (electrolyte monomer) represented by Formula 4-1

100 mL of dichloromethane, 5 g (32.45 mmol) of dimethyl(2-hydroxyethyl)phosphonate, and 4.92 g (48.67 mmol) of triethylamine introduced into a reactor to prepare a mixed solution.

After cooling the reactor to 0 °C, 3.23 g (35.70 mmol) of acryloyl chloride was added to the mixed solution over 10 minutes.

Thereafter, the solution was stirred at room temperature for 24 hours, washed three times with water ($H_2O$), and dried under reduced pressure to remove the solvent, thereby preparing a concentrated solution.

The concentrated solution was purified by column chromatography using hexane and ethyl acetate to obtain 4.66 g (yield: 69.0%) of an electrolyte monomer.

The obtained electrolyte monomer was the compound represented by Formula 4-1 above.

[TABLE 1]

| | Type and Ratio of electrolyte monomer | | Content of electrolyte monomer based on total weight of first mixture (wt%) |
|---|---|---|---|
| | Type | Ratio | |
| Example 1 | A1 + TMPTA | 1 : 1 (A1 : TMPTA) | 7.5 |
| Example 2 | A2 + TMPTA | 1 : 1 (A2 : TMPTA) | 7.5 |
| Example 3 | A3 + TMPTA | 1 : 1 (A3 : TMPTA) | 7.5 |
| Example 4 | A4 + TMPTA | 1 : 1 (A4 : TMPTA) | 7.5 |
| Example 5 | A1 + A3 | 1 : 1 (A1 : A3) | 7.5 |
| Example 6 | A2 + A3 | 1 : 1 (A2 : A3) | 7.5 |
| Example 7 | A1 + A4 | 1 : 1 (A1 : A4) | 7.5 |
| Example 8 | A2 + A4 | 1 : 1 (A2 : A4) | 7.5 |
| Example 9 | A3 + A4 | 1 : 1 (A3 : A4) | 7.5 |
| Example 10 | A1 + TMPTA | 1 : 1 (A1 : TMPTA) | 5 |
| Example 11 | A1 + TMPTA | 1 : 1 (A1 : TMPTA) | 10.5 |
| Comparative Example 1 | - | - | - |
| Comparative Example 2 | TMPTA | - | 7.5 |

The specific components described in Table 1 are as follows.

A1: Compound represented by Formula 2-1 above

A2: Compound represented by Formula 3-1 above
A3: Compound represented by Formula 2-2 above
A4: Compound represented by Formula 4-1 above
TMPTA: Trimethylolpropane triacrylate

**Experimental Example 1: Evaluation of electrolyte**

**(1) Evaluation of self-extinguishing property**

1) Examples 1 to 11 and Comparative Example 2

Glass fiber was cut into a diameter of 16 pi, dried at 120 °C to prepare dried glass fiber, and the mass (g) of the dried glass fiber was measured.
A gasket and the dried glass fiber were sequentially placed into the bottom of a coin cell, followed by injection of 0.5 mL of the first mixed solution prepared according to the above-described examples and Comparative Example 2. Thereafter, the spacer and cap were sequentially placed to assemble the coin cell.
Thereafter, the dried glass fiber was placed and impregnated with the first mixed solution, then cured for 1 hour at 70 °C. Subsequently, the coin cell was disassembled to prepare a sample (a sample in which the dried glass fiber impregnated with the first mixed solution was cured), and the mass (g) of the sample was measured.
After igniting the sample, the time until the fire went out (extinguishing time) was measured.
The self-extinguishing time was calculated according to Equation 1 below.

[Equation 1]

$$\text{Self} - \text{extinguishing time (s/g)} = \frac{\text{Extinguishing time (s)}}{\text{Sample mass (g)} - \text{Dried glass fiber mass (g)}}$$

2) Comparative Example 1

Glass fiber was cut into a diameter of 16 pi, dried at 120 °C to prepare dried glass fiber.
3 ml of the electrolyte according to above-described Comparative Example 1 was placed into a sealed container, and the mass (g) of the electrolyte was measured.
Thereafter, the dried glass fiber was placed into the sealed container and impregnated with the electrolyte to prepare a sample. The sample was then taken out, and the mass (g) of the residual electrolyte that was not impregnated was measured.
After igniting the sample, the time until the fire went out (extinguishing time) was measured.
The self-extinguishing time was calculated according to Equation 2 below.

[Equation 2]

$$\text{Self} - \text{extinguishing time (s/g)} = \frac{\text{Extinguishing time (s)}}{\text{Electrolyte mass (g)} - \text{Residual electrolyte mass (g)}}$$

The results of the self-extinguishing time calculation are shown in Table 2 below.

[TABLE 2]

| Classification | Self-extinguishing time (s/g) |
|---|---|
| Example 1 | 67.11 |
| Example 2 | 62.08 |
| Example 3 | 66.38 |
| Example 4 | 42.52 |
| Example 5 | 58.09 |
| Example 6 | 51.35 |
| Example 7 | 34.20 |

(continued)

| Classification | Self-extinguishing time (s/g) |
|---|---|
| Example 8 | 31.88 |
| Example 9 | 35.11 |
| Example 10 | 71.78 |
| Example 11 | 28.98 |
| Comparative Example 1 | 72.66 |
| Comparative Example 2 | 70.05 |

Referring to Table 2, in the examples, where at least one of A1 to A4 was used as an electrolyte monomer, the self-extinguishing time was 71.78 s/g or less.

In Comparative Example 1, where no electrolyte monomer was used, the self-extinguishing time exceeded 72 s/g.

In Comparative Example 2, where only trimethylolpropane triacrylate (TMPTA) was used as an electrolyte monomer, the self-extinguishing time was 70.05 s/g, which was longer than that of Examples 1 to 9 where the same amount (7.5 wt%) of the electrolyte monomer was used. In addition, in the case of Comparative Example 2, the initial capacity efficiency and cycle life retention described below were lower than those of the examples.

**Experimental Example 2: Evaluation of lithium secondary battery**

(1) Measurement of initial capacity and evaluation of initial capacity efficiency

The lithium secondary batteries according to the above-described examples and comparative examples were charged (CC-CV 0.1C 4.3V 0.005C CUT-OFF) in a chamber at 25 °C, then the initial charge capacity was measured, and were discharged (CC 0.1V 3.0V CUT-OFF), then the initial discharge capacity was measured.

The initial capacity efficiency was evaluated by calculating the percentage (%) obtained by dividing the measured initial discharge capacity by the measured initial charge capacity.

The measured initial charge capacity and initial discharge capacity, and the evaluated initial capacity efficiency are shown in Table 3 below.

**(2) Evaluation of cycle life retention rate**

Charging (CC/CV 0.5C 4.3V 0.05C CUT-OFF) and discharging (CC 0.5C 2.7V CUT-OFF) were repeated on the lithium secondary batteries according to the above-described examples and comparative examples for 100 cycles at 25 °C. Then, the cycle life retention rate was evaluated as the percentage of the discharge capacity at the 100th cycle divided by the discharge capacity at the 1st cycle.

The evaluated cycle life retention rate is shown in Table 3 below.

[TABLE 3]

| Classification | Initial charge capacity (mAh/g) | Initial discharge capacity (mAh/g) | Initial capacity efficiency (%) | Cycle life retention (25 °C, 100 cycles) (%) |
|---|---|---|---|---|
| Example 1 | 169.8 | 165.4 | 97.40 | 97.92 |
| Example 2 | 173.1 | 168.2 | 97.18 | 98.80 |
| Example 3 | 175.8 | 171.4 | 97.50 | 98.54 |
| Example 4 | 176.3 | 175.1 | 99.32 | 99.35 |
| Example 5 | 173.4 | 172.4 | 99.45 | 99.40 |
| Example 6 | 172.7 | 171.8 | 99.48 | 99.13 |
| Example 7 | 172.7 | 172.1 | 99.63 | 99.15 |
| Example 8 | 175.1 | 174.2 | 99.49 | 99.09 |
| Example 9 | 174.9 | 174.5 | 99.78 | 99.46 |

(continued)

| Classification | Initial charge capacity (mAh/g) | Initial discharge capacity (mAh/g) | Initial capacity efficiency (%) | Cycle life retention (25 °C, 100 cycles) (%) |
|---|---|---|---|---|
| Example 10 | 175.7 | 175.3 | 99.80 | 99.55 |
| Example 11 | 172.3 | 167.3 | 97.12 | 97.45 |
| Comparative Example 1 | 174.9 | 164.5 | 96.97 | 97.24 |
| Comparative Example 2 | 173.2 | 165.2 | 95.3 | 95.34 |

Referring to Table 3, in the examples using the lithium secondary batteries comprising the electrolyte containing a polymer or copolymer of at least one electrolyte monomer selected from the group consisting of A1 to A4, the initial capacity efficiency was 97.12% or more and the cycle life retention was 97.45% or more, which were higher than those of the comparative examples.

In Examples 5 to 8, where at least one of the compounds represented by A1 and A2; and at least one of the compounds represented by A3 and A4 were used in combination as electrolyte monomers, the initial discharge capacity, initial capacity efficiency, and cycle life retention were high.

In Example 9, where A3 and A4 were used in combination as electrolyte monomers, the initial capacity efficiency and cycle life retention were high.

In the comparative examples using electrolyte monomers other than A1 to A4 or using an electrolyte that did not include electrolyte monomers, the initial charge capacity, initial capacity efficiency, and cycle life retention were reduced.

Although embodiments or aspects have been described in detail for the purpose of illustration, it is to be understood that such detail is solely for that purpose and that the disclosure is not limited to the disclosed embodiments or aspects, but, on the contrary, is intended to cover modifications and equivalent arrangements that are within the spirit and scope of the disclosure and appended claims. Additionally, it is to be understood that the present disclosure contemplates that, to the extent possible, one or more features of any embodiment or aspect can be combined with one or more features of any other embodiment or aspect.

## Claims

**1.** A monomer for an electrolyte comprising a compound represented by Formula 1 below:

[Formula 1]

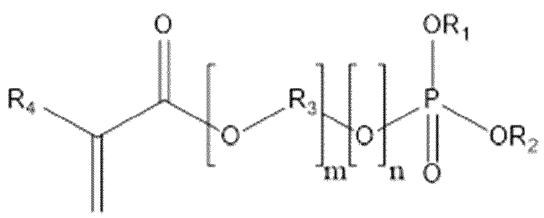

wherein in Formula 1, $R_1$ and $R_2$ are each independently a substituted or unsubstituted C1 to C12 alkyl group, or a substituted or unsubstituted C6 to C12 aromatic hydrocarbon group, $R_1$ and $R_2$ may be linked to each other to form a ring,
$R_3$ is a substituted or unsubstituted C1 to C5 alkylene group,
$R_4$ is hydrogen or a C1 to C5 alkyl group,
m is 1 to 5, and n is 0 or 1.

**2.** The monomer for an electrolyte according to claim 1, wherein $R_1$ and $R_2$ are each independently a substituted or unsubstituted C1 to C10 alkyl group, or a substituted or unsubstituted C6 to C10 aromatic hydrocarbon group, $R_1$ and $R_2$ may be linked to each other to form a ring,

$R_3$ is a C2 alkylene group,
$R_4$ is hydrogen or a C1 to C3 alkyl group, and
m is 1 to 3.

3. The monomer for an electrolyte according to claim 1 or 2, wherein m is 1.

4. The monomer for an electrolyte according to any one of claims 1 to 3, wherein n is 1, $R_1$ and $R_2$ are each independently a substituted or unsubstituted C6 to C10 aryl group, or a substituted or unsubstituted C1 to C7 alkyl group, and $R_3$ is a substituted or unsubstituted C1 to C3 alkylene group; or
n is 0, $R_1$ and $R_2$ are each independently a substituted or unsubstituted C1 to C7 alkyl group, and $R_3$ is a substituted or unsubstituted C1 to C3 alkylene group.

5. The monomer for an electrolyte according to any one of claims 1 to 4, wherein n is 1, $R_1$ and $R_2$ are each independently an unsubstituted C6 to C10 aryl group, or an unsubstituted C1 to C5 alkyl group, and $R_3$ is an unsubstituted C2 alkylene group; or
n is 0, $R_1$ and $R_2$ are each independently an unsubstituted C1 to C5 alkyl group, and $R_3$ is an unsubstituted C2 alkylene group.

6. The monomer for an electrolyte according to any one of claims 1 to 5, wherein the monomer for an electrolyte comprises at least one selected from the group consisting of compounds represented by Formulas 2 to 4 below:

[Formula 2]

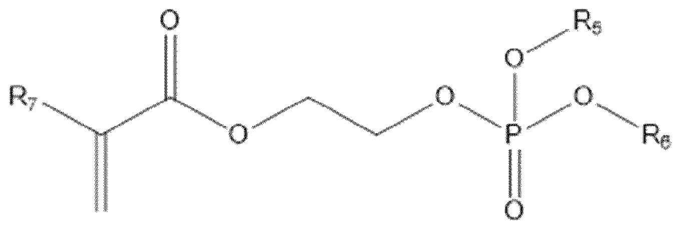

wherein in Formula 2, $R_5$ and $R_6$ are each independently hydrogen, a substituted or unsubstituted C1 to C5 alkyl group, or a substituted or unsubstituted C6 to C10 aryl group, and $R_7$ is hydrogen or a C1 to C3 alkyl group),

[Formula 3]

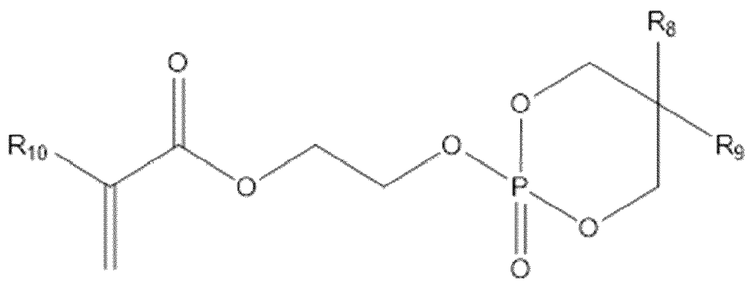

wherein in Formula 3, $R_8$ and $R_9$ are each independently hydrogen, or a substituted or unsubstituted C1 to C3 alkyl group, and $R_{10}$ is hydrogen or a C1 to C3 alkyl group,

[Formula 4]

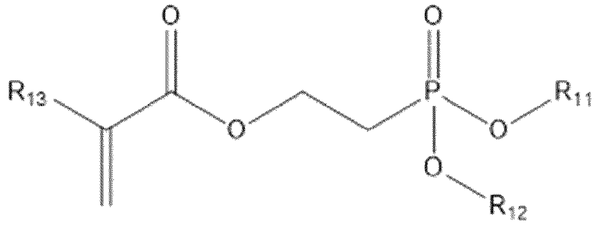

wherein in Formula 4, $R_{11}$ and $R_{12}$ are each independently hydrogen, or a substituted or unsubstituted C1 to C5

alkyl group, and $R_{13}$ is hydrogen or a C1 to C3 alkyl group.

**7.** The monomer for an electrolyte according to claim 6, wherein the compound represented by Formula 1 comprises at least one selected from the group consisting of compounds represented by Formulas 2-1, 2-2, 3-1 and 4-1 below:

[Formula 2-1]

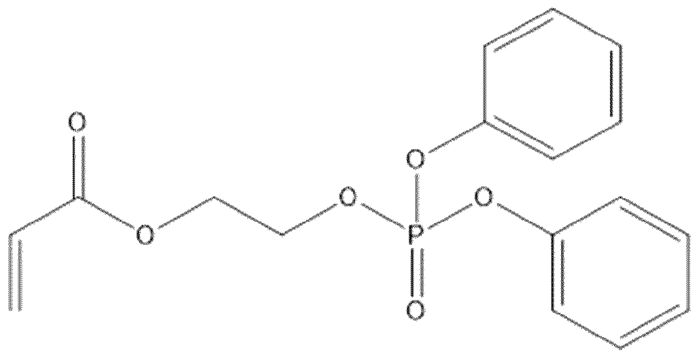

[Formula 2-2]

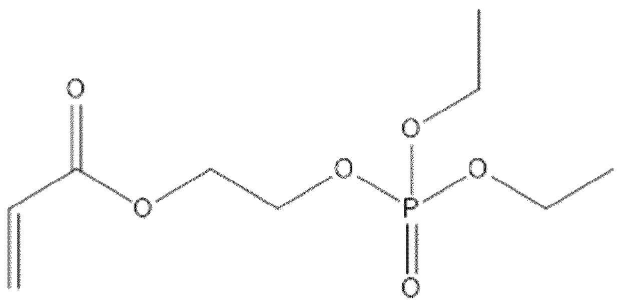

[Formula 3-1]

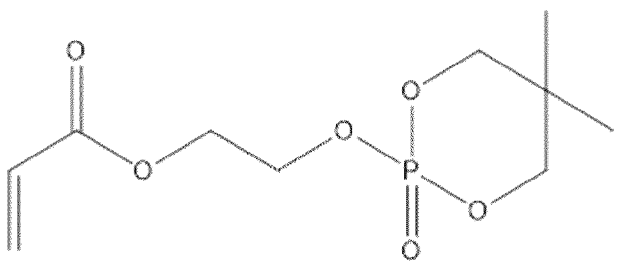

[Formula 4-1]

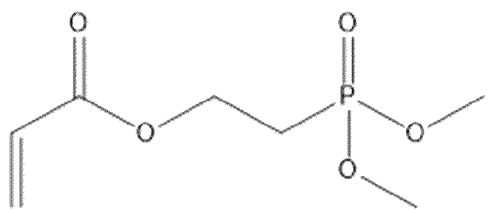

and

**8.** The monomer for an electrolyte according to claim 6 or 7, wherein the monomer for an electrolyte comprises at least

one of the compound represented by Formula 3 above and the compound represented by Formula 4 above; and the compound represented by Formula 2 above, or the monomer for an electrolyte comprises the compound represented by Formula 2 above and the compound represented by Formula 4 above.

**9.** An electrolyte for a secondary battery comprising:

a flame retardant compound comprising a polymer formed by polymerizing the monomer for an electrolyte according to any one of claims 1 to 8; and
a lithium salt.

**10.** The electrolyte for a secondary battery according to claim 9, wherein the content of the flame retardant compound is 3% by weight to 60% by weight based on the total weight of the electrolyte for the secondary battery.

**11.** A lithium secondary battery comprising:

a cathode;
an anode disposed to face the cathode; and
an electrolyte layer disposed between the cathode and the anode, and comprising the electrolyte for a secondary battery according to claim 9 or 10.

**12.** A method of preparing an electrolyte for a secondary battery, comprising:

preparing a first mixed solution comprising the monomer for an electrolyte according to any one of claims 1 to 8 and an electrolyte solution; and
curing the first mixed solution.

**13.** The method of preparing an electrolyte for a secondary battery according to claim 12, wherein the first mixed solution further comprises an organic polymer and an inorganic electrolyte.

**14.** The method of preparing an electrolyte for a secondary battery according to claim 12 or 13, wherein the content of the monomer for an electrolyte is 3% by weight to 60% by weight based on the total weight of the first mixed solution.

**15.** The method of preparing an electrolyte for a secondary battery according to any one of claims 12 to 14, wherein the first mixed solution further comprises a thermal initiator or a photo-initiator, and
the step of curing the first mixed solution comprises heat-treating the first mixed solution or irradiating the first mixed solution with light.

[FIG. 1]

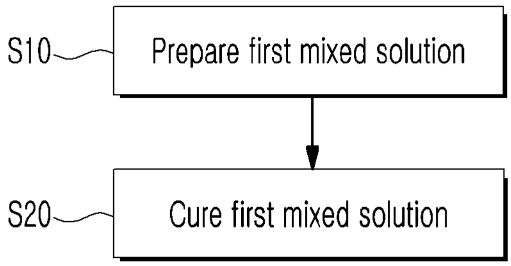


[FIG. 2]

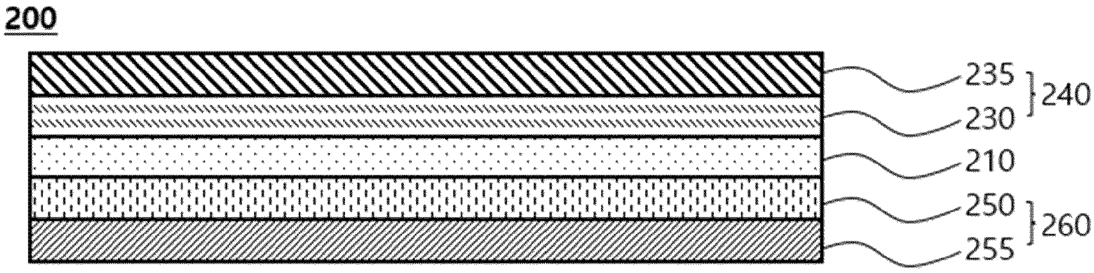


[FIG. 3]